(19) Europäisches Patentamt European Patent Office Office européen des brevets

(11) **EP 2 761 589 B1**

(12) **EUROPEAN PATENT SPECIFICATION**

(45) Date of publication and mention of the grant of the patent:
**26.02.2020 Bulletin 2020/09**

(21) Application number: **12770095.3**

(22) Date of filing: **28.09.2012**

(51) Int Cl.:
**G06T 7/00** *(2017.01)*  **G06T 3/00** *(2006.01)*

(86) International application number:
**PCT/EP2012/069250**

(87) International publication number:
**WO 2013/045651 (04.04.2013 Gazette 2013/14)**

(54) **JOINT GEOMETRIC AND PHOTOMETRIC MULTIVIEW IMAGE REGISTRATION**

VERBINDUNGSGEOMETRIE UND PHOTOMETRISCHE MEHRANSICHTS-BILDREGISTRIERUNG

ALIGNEMENT D'IMAGE MULTI-VUE CONJOINTEMENT GÉOMÉTRIQUE ET PHOTOMÉTRIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.09.2011 US 201161541662 P**

(43) Date of publication of application:
**06.08.2014 Bulletin 2014/32**

(73) Proprietor: **Fraunhofer-Gesellschaft zur Förderung der angewandten Forschung e.V. 80686 München (DE)**

(72) Inventors:
• **WAIZENEGGER, Wolfgang**
  **10997 Berlin (DE)**
• **FELDMANN, Ingo**
  **13505 Berlin (DE)**
• **ATZPADIN, Nicole**
  **16540 Hohen Neuendorf (DE)**
• **SCHREER, Oliver**
  **10823 Berlin (DE)**
• **EISERT, Peter**
  **10587 Berlin (DE)**

(74) Representative: **Schenk, Markus et al Schoppe, Zimmermann, Stöckeler Zinkler, Schenk & Partner mbB Patentanwälte Radlkoferstrasse 2 81373 München (DE)**

(56) References cited:
• WOLFGANG WAIZENEGGER ET AL: "Depth Driven Photometric and Geometric Image Registration for Real-Time Stereo Systems", PROCEEDINGS OF THE VISION, MODELING, AND VISUALIZATION WORKSHOP 2011, BERLIN, GERMANY, 4-6 OCTOBER, 2011, 4 October 2011 (2011-10-04), pages 25-32, XP55043439, DOI: 10.2312/PE/VMV/VMV11/025-032 ISBN: 978-3-90-567385-2
• VISHAL MONGA ET AL: "A constrained optimization perspective on joint spatial resolution and dynamic range enhancement", 2010 44TH ASILOMAR CONFERENCE ON SIGNALS, SYSTEMS AND COMPUTERS - 7-10 NOV. 2010 - PACIFIC GROVE, CA, USA, IEEE, PISCATAWAY, NJ, USA, 7 November 2010 (2010-11-07), pages 870-874, XP031860731, DOI: 10.1109/ACSSC.2010.5757691 ISBN: 978-1-4244-9722-5
• JUHO KANNALA ET AL: "Dense and Deformable Motion Segmentation for Wide Baseline Images", 15 June 2009 (2009-06-15), IMAGE ANALYSIS, SPRINGER BERLIN HEIDELBERG, BERLIN, HEIDELBERG, PAGE(S) 379 - 389, XP019121149, ISBN: 978-3-642-02229-6 abstract section 2, "Overview"; Algorithm 2; page 381 page 382, paragraph 3.1 - page 386, paragraph 3.7
• POCK T ET AL: "Global Solutions of Variational Models with Convex Regularization", SIAM JOURNAL ON IMAGING SCIENCES,, vol. 3, no. 4, 1 January 2010 (2010-01-01) , pages 1122-1145, XP009164828,

EP 2 761 589 B1

**(Cont. next page)**

- THOMAS POCK ET AL: "A Convex Formulation of Continuous Multi-label Problems", 12 October 2008 (2008-10-12), COMPUTER VISION Â ECCV 2008; [LECTURE NOTES IN COMPUTER SCIENCE], SPRINGER BERLIN HEIDELBERG, BERLIN, HEIDELBERG, PAGE(S) 792 - 805, XP019109304, ISBN: 978-3-540-88689-1 cited in the application abstract page 794, paragraph 3 - page 800, paragraph 4

- RUSSELL C HARDIE ET AL: "Joint MAP Registration and High-Resolution Image Estimation Using a Sequence of Undersampled Images", IEEE TRANSACTIONS ON IMAGE PROCESSING, IEEE SERVICE CENTER, PISCATAWAY, NJ, US, vol. 6, no. 12, 1 December 1997 (1997-12-01), XP011026246, ISSN: 1057-7149

**Description**

Embodiments of the present invention relate to a method for registering multiview images, such as, for example the left image and the right image of a stereo image. Further embodiments of the present invention relate to a multiview image registration apparatus. Further embodiments of the present invention relate to depth-driven photometric and geometric image registration for real-time stereo systems.

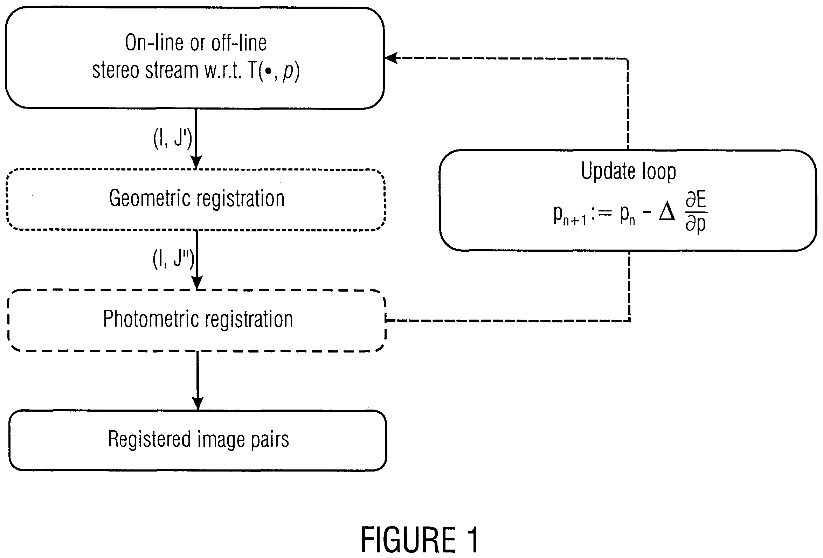

A careful adjustment of image colors is advantageous and vital for many multi-view computer vision algorithms. Among other, computational stereo and a constitutive view synthesis can greatly benefit from high precision photometric alignment. According to the exhaustive studies of Hirschmüller et al. [HS09], [HS07] (see list of references at end of description) disparity estimation results for a stereo image pair recorded with the very same camera, i.e. identical photometric settings, tend to be superior to those taken with different color adjustments. But even with a careful manual balancing of all camera settings for a stereo system, it is difficult and time consuming to adapt and match photometric properties off all cameras. While a sophisticated color chart based manual photometric adjustment is possible under lab conditions, there are many application that do not allow intricated user interaction. Particularly, user centric on-line stereo systems, like eye contact preserving videocommunication solutions require a fully automatic color registration work-flow, cf. [SFA_08], [WASF11], [WFS11]. The article "Depth Driven Photometric and Geometric Image Registration for Real-Time Stereo Systems" by W. Waizenegger, I. Feldmann and P. Eisert, published in "Proc. International Workshop on Vision, Modeling, and Visualization", Berlin, Germany, pp. 25-32 Oct., 2011, shows in its Figure 1 an eye contact preserving video-communication research system. Based on depth estimation a virtual view is synthesized. To enable acceptable visual quality for a multiview synthesis, the different images typically need to be photometrically aligned. The article "Depth Driven Photometric and Geometric Image Registration for Real-Time Stereo Systems" by W. Waizenegger, I. Feldmann and P. Eisert, published in "Proc. International Workshop on Vision, Modeling, and Visualization", Berlin, Germany, pp. 25-32 Oct., 2011, is referenced to for further detail.

Photometric and geometric image registration for various applications including aerial photography, image mosaicing or computational stereo has a long tradition in computer vision. Considering stereo vision, one of the key interests is the improvement of matching quality. Beside algorithmic developments for radiometric insensitive similarity measures [HLL08], [WYD07] and intensive studies on the effects of photometric changes to various matching criteria [HS09], [HS07] the improvement of image formation and colorimetric preprocessing has a high focus in research. While some authors concentrate on a general perspective on digital image formation and parametric color models for digital imaging, e.g. [RSYD05] or [CSZ09] respectively, others take care about concrete algorithmic solutions to perform a full radiometric camera calibration or pursue a normalization approach with respect to lighting geometry and illumination color [KP08], [KFP08], [GN03], [FSC98]. Contrary, there are activities on the development of color chart based automatic image registration methods, e.g. [KSP_10], [IW05]. Another approach was proposed by Bartoli [Bar08] that focuses on photometric and geometric image registration for post-processing and performs a highly constrained geometric image registration by homography fitting of the image planes.

In "A Constrained Optimization Perspective on Joint Spatial Resolution and Dynamic Range Enhancement" (2010 44th ASILOMAR Conference on Signals, Systems and Computers - 7-10 Nov. 2010 - Pacific Grove, CA, USA, IEEE, Piscataway, NJ, USA, November 7, 2010, pages 870-874) a concept for transformation of variables to establish separable convexity of the cost function.

In "Dense and Deformable Motion Segmentation for Wide Baseline Images" (June 15, 2009, Image Analysis, Springer Berlin Heidelberg, Berlin, Heidelberg, pages 379-389) a concept is described aiming for dealing with deforming motions and large illumination changes by using a bottom-up segmentation strategy.

It would be desirable to improve the image registration of multiview images, such as stereo images, in particular with respect to the performance of disparity estimation and the visual quality of multi-view view synthesis.

This object and/or possible other objects is achieved by method for registering multiview images according to claim 1 or claim 16, and by a multiview image registration apparatus according to claim 17.

A method for registering multiview images comprises performing a geometric registration between a first image and a second image of the multiview image to obtain a current geometric registration function. The method further comprises performing a photometric registration between the first image and a geometrically registered version of the second image to obtain an update information for a current set of photometric parameters. The geometrically registered version is determined on the basis of the current geometric registration function. The current set of photometric parameters is then updated on the basis of the update information to obtain an updated set of photometric parameters. With the updated set of photometric parameters, the geometric registration and the photometric registration are then repeated.

According to further embodiments, a method for registering multiview images comprises transforming pixel values of at least one image of the multiview images on the basis of a current set of photometric parameters to obtain at least one transformed image. A current geometric registration of the at least one transformed image and a first image is then determined. The method also comprises determining a geometrically registered version of the transformed image on the basis of the current geometric registration. Then a new parameter set for the pixel transformation is determined on the basis of the geometrically registered version of the transformed image and the current geometric registration. The method also comprises determining whether a subsequent iteration is to be performed. If so, the new parameter set replaces the current parameter set and the geometrically registered version replaces the at least one image for the subsequent iteration. In case the subsequent iteration is to be performed, the subsequent iteration of the above actions is then performed.

Further embodiments provide a multiview image registration apparatus comprising an input for receiving a multiview image, a geometric registration unit, a photometric registration unit, an updating unit, and an iteration unit. The geometric registration unit is configured for geometrically registering a first image and a second image of the multiview image to obtain a current geometric registration function. The photometric registration unit is configured for photometrically registering the first image and a geometrically registered version of the second image to obtain an update information for a current set of photometric parameters. The geometrically registered version of the transformed image is determined on the basis of the current geometric registration function. The updating unit is configured for updating the current set of photometric parameters on the basis of the update information to obtain an updated set of photometric parameters. The iteration unit is configured for conditionally controlling the geometric registration unit and the photometric registration unit to perform a subsequent iteration with the updated set of photometric parameters.

Embodiments are based on a novel depth driven algorithm for high accuracy joint geometric and photometric stereo image registration. The goal is to optimize photometric camera settings with respect to optimal depth estimation results. A fully automatic on-line adjustment of colorimetric camera settings may then be performed on the basis of the obtained registration results. In the alternative or in addition, an electronic offline fine-tuning of photometric properties, for, e.g., recorded stereo sequences may be performed. The registration process may be formulated in terms of an alternating energy minimization procedure, where the geometric and photometric registration energies are consistently incorporated into the same continuous energy functional. This allows using the powerful machinery of variational calculus in order to optimize for a state of minimal energy. Moreover, since a depth-based geometric image registration and the photometric registration are pursued concurrently, the quality of photometric registration is typically directly related to the performance of depth estimation and vice versa. Therefore, the proposed approach is well suited to enhance the outcome of stereo algorithms and improve the visual experience of a resulting view-synthesis. Considering real-time stereo systems, where the computational load is of significant interest, matching photometric properties can greatly help to reduce the computational complexity. Instead of specialized and expensive similarity measures that compensate for different radiometric conditions, much simpler similarity measures and smaller window sizes could be used while results of comparable quality can be expected, cf. [HS09], [HS07], [HLL08], [WYD07]. The proposed registration method may be designed with a focus on parallelizability which allows for an efficient real-time implementation on graphics hardware using CUDA (Compute Unified Device Architecture).

The novel depth driven approach is presented for a highly accurate joint photometric and geometric image alignment. Thereby, the registration problem is expressed in terms of a consistent, elegant and efficient energy formulation. Moreover, a real-time capable alternating iterative optimization scheme (alternating optimization) is proposed to solve for a state of minimal energy. Since our energy formulation is based on pixel-wise color similarity our registration procedure directly improves the performance of disparity estimation and the visual quality of multi-view view synthesis. The proposed approach is related to the following categories and subject descriptors (according to ACM CCS - Association for Computing Machinery Computing Classification System): Photometric and Geometric Registration, Real-Time, Stereo, 3D Video Processing, GPGPU (General-purpose computing on graphics processing units).

The method may further comprise storing the current geometric registration function as a starting point for the geometric registration to be performed in the subsequent iteration. This makes it possible to benefit, within the subsequent iteration, from the results determined during the previous iteration in order to further improve the geometric registration.

In particular it might be that during each iteration only a limited number of sub-iterations of the geometric registration are performed that typically do not lead to the optimal solution of the geometric registration problem, or to a solution that is sufficiently close to the optimal solution in the sense of some convergence criterion. The subsequent iteration may then pick up the overall, iteration-spanning optimization process regarding the geometric registration from where the previous iteration left off. In the meantime, the photometric registration, which is performed after the geometric registration and a corresponding geometric transformation of the second image, may typically benefit from the improved geometric registration of the first image and the geometrically registered version of the second image.

A photometric transformation may be performed on the second image to obtain a photometrically-transformed version of the second image. The photometric transformation may be based on the current set of photometric parameters. The current set of photometric parameters may have been determined by a photometric registration of a preceding iteration, or provided as a default value in case the current iteration is the first iteration that is performed. It is expected that the photometric transformation improves the performance of the geometric registration that is performed subsequently.

The multiview images may be provided by at least a first image acquisition device and a second image acquisition device. The method may then further comprise controlling the second image acquisition device using the current set of photometric parameters during a current iteration. The method may also comprise controlling the second image acquisition device using using the updated set of photometric parameters during the subsequent iteration, so that a new second image corresponding to the subsequent iteration is acquired with the updated set of photometric parameters. In this manner, image acquisition parameters for the second image acquisition device may be gradually improved in the sense that the second image acquisition device provides images that are more and more similar to the images provided by the first image acquisition device with respect to photometric properties. According to some embodiments, this may be understood as a closed loop control for the second image acquisition device, where the deviation between a reference value (e.g., the pixel value of a particular pixel of the first image provided by the first image acquisition device) and an actual value (e.g., the pixel value of a particular pixel of the second image provided by the second image acquisition device) is provided as an input to a controller, in the present case for example the photometric registration. The particular pixels of the first and second images are assigned to each other, per definition, by the geometric registration - whether this assignment be correct or incorrect. Typically, more than only one pair of particular pixels of the first and second images are considered in order to determine a photometric deviation between the first image and the second image. For example, the entire first image and the entire second image may be considered. Another alternative would be to consider a certain region or every n-th pixel in every m-th row of the first and second image in order to keep a computational effort for the photometric registration within reasonable bounds. Note that the determination of a photometric deviation between the first and second images (and possible also between further images, i.e., a third image, a fourth image, ...) described above may also be applicable to other embodiments of the method for registering a multiview image that are not directly related or connected to image acquisition devices, but relate to, for example, multiview still photographs, steoreograms, multiview video sequences, etc.

The geometric registration and the photometric registration may be part of an overall registration process that is formulated in terms of an alternating energy minimization procedure. A geometric registration energy and a photometric registration energy may be *(consistently)* incorporated into a joint continuous energy functional. The geometric registration may comprise evaluating a partial differential of the continuous energy function with respect to the geometric registration function. In an analog manner, the photometric registration may comprise evaluating a partial differential of the continuous energy function with respect to the set of photometric parameters.

According to some embodiments, the geometric registration may comprise a primal dual proximal optimization.

The geometric registration may comprise performing at least one minimization step of a minimization task with respect to the geometric registration function and a variational problem.

The geometric registration may be based on a convexification of a minimization task with respect to the geometric registration function and a variational problem. The convexification may be performed via functional lifting.

At least one of the geometric registration and the photometric registration may be performed as a parallelized process.

According to some embodiments, only a limited number of sub-iterations are performed during the geometric registration.

The multiview images may correspond to a frame of a sequence of multiview images, wherein at least one of the geometric registration function and the updated set determined for a first frame are used as a starting point for at least one of the geometric registration and the photometric registration of a subsequent second frame.

The geometric registration and the photometric registration may provide a joint photometric and geometric image registration.

Brief description of the drawings

Advantageous implementations of embodiments of the present invention are the subject of the dependent claims. Further, preferred embodiments are described with respect to the figures, among which

Fig. 1 shows a schematic illustration of a registration algorithm for registering multiview images;

Fig. 2 shows a schematic flow diagram of a method for registering a multiview image, the method comprising alternating geometric and photometric registrations;

Fig. 3 shows a schematic flow diagram of another method for registering a multiview image, the method comprising alternating geometric and photometric registrations;

Fig. 4 shows a schematic block diagram of a possible processing architecture or of a possible multiview image registration apparatus;

Fig. 5 shows a schematic block diagram of another possible processing architecture or of a possible multiview image registration apparatus for processing a sequence of multiview images;

Fig. 6 shows a schematic block diagram of another possible processing architecture or of a possible multiview image registration apparatus for online control of photometry-related settings of an image acquisition device.

The following description is organized as follows. First, in the section "Image Registration in Terms of Energy Minimzation", a general formulation of the proposed depth driven registration approach in terms of energy minimization is presented. Then, in sections "Globally Optimal Geometric Image Registration" and Depth-driven Photometric Image Registration", the concrete continuous energy functional and the steps for geometric and photometric image registration, respectively, are introduced. In the section "Joint Photometric Image Registration" the fusion of both steps into an alternating iterative minimization scheme is described. Then a successful implementation of the proposed technique to two different fields of application is illustrated in the section "Experimental Results".

## Image Registration in Terms of Energy Minimization

From a general viewpoint, we define our geometric and photometric stereo registration algorithm as a minimization problem with respect to the following energy

$$E(u, \mathrm{T}) := E_S(u) + \lambda E_D(u, \mathrm{T}), \qquad (1)$$

where the total energy E is a composition of a smoothness term $E_S$ and a data term $E_D$ weighted by a scalar $\lambda > 0$. The variables $u$ and T denote the geometric and photometric registration functions, respectively. For simplicity, we assume in our work that the stereo image pair is in a rectified state, which can be accomplished by image rectification transformation or sophisticated on-line camera adjustment techniques, e.g. [ZMEK10]. Therefore, neglecting photometric registration and supposing color constancy, for a stereo image pair I; J an optimal geometric registration $u : \Omega \to \mathbb{R}$ has to fulfill

$$I(\boldsymbol{x}) = J(x + u(\boldsymbol{x}), y), \qquad (2)$$

where $\boldsymbol{x} = (x; y)^T$ are Cartesian coordinates in the image domain $\Omega \subset \mathbb{R}^2$, and an image I is considered as a mapping $I : \Omega \to \mathbb{R}^m$, $I(x) := (I^{C_l}(\boldsymbol{x}), \dots, I^{C_m}(\boldsymbol{x}))$ from $\Omega$ to a m-dimensional color space. Finally, we define the photometric registration $\mathrm{T} : \mathbb{R}^m \times \mathbb{R}^k \to \mathbb{R}^m$, with $\boldsymbol{T}(I(x), \boldsymbol{p}) = (\mathrm{T}^{C_l}(I(\boldsymbol{x}), \boldsymbol{p}), \dots, \mathrm{T}^{C_m}(I(\boldsymbol{x}), \boldsymbol{p}))$ as a color transformation mapping with a k-dimensional parameter vector $\boldsymbol{p} = (p_1, \dots, p_k)$. Rewriting equation (2) with respect to photometric registration leads to the very basic requirement for a joint geometric and photometric stereo image registration mapping:

$$I(\boldsymbol{x}) = \mathrm{T}(J(x + u(\boldsymbol{x}), y), \boldsymbol{p}). \qquad (3)$$

In the following, we will compose a concrete continuous energy formulation according to the form of equation (1). It takes equations (2) and (3) into consideration and allows for an elegant, consistent and effective joint estimation of the unknown geometric registration function $u$ and the parameter vector $\boldsymbol{p}$, for an arbitrary color transformation mapping.

## Globally Optimal Geometric Image Registration

Based on the general description in section "Image Registration in Terms of Energy Minimization", we are now able to motivate the choice of an energy functional that allows a globally optimal solution of the geometric image registration mapping $u$. Disregarding the photometric registration, based on equation (2), we can derive the commonly used absolute differences

$$\mathrm{AD}(u,\boldsymbol{x},I,J) = \sum_{i=c_1}^{c_m} \left| I^i(\boldsymbol{x}) - J^i(x + u(\boldsymbol{x}),y) \right| \qquad (4)$$

as a pixel wise measure for image registration quality. Consequently, we employ the integral of the absolute differences over the image domain as the data term of our energy functional. For regularization, i.e. as a smoothness term, we use the total variation of *u*, which is a convex function that allows sharp discontinuities. Therefore, the minimization task with respect to the unknown geometric registration function can be expressed in terms of the variational problem

$$\min_{u} \left\{ \int_{\Omega} |\nabla u(\boldsymbol{x})| + \lambda \mathrm{AD}(u,\boldsymbol{x},I,J)dx \right\}. \qquad (5)$$

A stationary point for this variational problem could be obtained by solving the corresponding Euler-Lagrange equations with a simple gradient descent approach. However, since the data term of the functional cannot be expected to be convex, a stationary point of the functional might be not the globally optimal solution of the variational problem. Additionally, gradient descent iteration approaches suffer from a low rate of convergence.

For our work, we choose another solution for solving the variational problem (5) which was proposed in [PSG_08]. The authors pursue a convexification of the original expression via functional lifting. This allows the computation of a globally optimal solution with an efficient primal-dual proximal point iteration algorithm. Moreover, the algorithm is well suited for parallelization on graphics hardware, which enables the real-time computation of a globally optimal solution for our optimization problem. Especially, considering a video sequence with little changes from one frame to another, the algorithm converges after a few iteration, because the primal and dual variables of the previous frame can be reused for the initialization of the iteration process for subsequent frame.

**Depth-driven Photometric Image Registration**

In the following, we will discuss the algorithmic steps of our photometric registration algorithm in case of a given depth or equivalently a given disparity based geometric registration mapping u. As stated in section "Image Registration in Terms of Energy Minimization", we assume a general application specific, parametric color transformation function T with the parameter vector p to act as the color distortion model. Consequently, we will formulate an energy functional with respect to the considerations of equation (3) and provide a generic iterative minimization scheme for arbitrary color distortion models. Finally, some application specific examples for concrete color transformation mappings and resulting minimization algorithms are presented.

For our photometric registration approach, we choose an energy functional that is consistent with the geometric registration process in section "Globally Optimal Geometric Image Registration". Therefore, we introduce the color mapping T to the formulation of the minimization task of equation (5) and obtain the optimization problem

$$\min_{\boldsymbol{p}} \left\{ \int_{\Omega} |\nabla u(\boldsymbol{x})| + \lambda \mathrm{AD}(u,\boldsymbol{x},I,\mathrm{T}(J,\boldsymbol{p}))dx \right\}. \qquad (6)$$

Because of preconditioning factors such as auto white balance or almost equal camera default settings, we can expect that the identity mapping is already close to the solution state. Therefore, we rely on a steepest gradient approach for optimizing toward a state of minimal energy. Since $AD(\cdot)$ is not differentiable at 0 we use the differential of the Huber norm with some small constant $\varepsilon$

$$H'_\varepsilon(x) = \begin{cases} \frac{x}{\varepsilon} & 0 \le |x| \le \varepsilon \\ \operatorname{sign}(x) & \varepsilon < |x| \end{cases} \qquad (7)$$

for the numerical optimization. Clearly, the integration operation of equation (6) does not depend on the optimization variable **p**. Thus, denoting $\alpha_i := H'_\varepsilon\left(I^i(x) - T^i(J(x+u(x),y),p)\right)$, the gradient of the energy functional with respect to p reads as follows:

$$\frac{\partial E}{\partial p} = -\lambda \sum_{i=c_1}^{c_m} \int_\Omega \alpha_i \left(\frac{\partial T^i}{\partial p_1}, \quad \ldots \quad , \frac{\partial T^i}{\partial p_k}\right)^T dx. \qquad (8)$$

Accordingly, the parameter update of our time marching numerical scheme has the form;

$$p_{n+1} := p_n - \Delta\frac{\partial E}{\partial p}, \qquad (9)$$

where $\Delta$ denotes the applied time step. The repetition of the parameter update until convergence, i.e. until the decrease of energy from $n$ to $n+1$ drops below a certain threshold, finally leads to the desired solution of the optimization problem (6).

*Example*: *On-line White Balance Registration (RGB Translation)*

For the setup of a stereo camera pair, a very basic task in order to gain a good photometric matching between the cameras is white balancing. Instead of adjusting each camera separately, our work enables a coupled approach, where the settings of one camera are automatically registered to the other camera. A potential approach for white balancing in digital camera processing pipelines is to transform RGB values to YUV color space, perform white balance by additive modification of U and V channels and transform back to RGB. An appropriate mathematical model for this procedure would be

$$T(r,g,b,u,v) = D\left(D^{-1}\begin{pmatrix} r \\ g \\ b \end{pmatrix} + \begin{pmatrix} 0 \\ u \\ v \end{pmatrix}\right), \qquad (10)$$

where $r, g, b$ are the values of the red, green and blue color channel, $u, v$ are the white balancing offsets and $D$ is the 3_3 constant matrix that maps YUV to RGB. Considering equation (8) and (9) the gradient decent optimization with respect to p = (u; v)T can be concretely formulated as

$$p_{n+1} := p_n + \Delta\lambda \sum_{i=1}^{3} \int_\Omega \alpha_i \begin{pmatrix} d_{i2} \\ d_{i3} \end{pmatrix} dx, \qquad (11)$$

where $p_0 = (0, 0)^T$ and $d_{jk}$, $1 \le j$; $k \le 3$ denotes the element in the row $j$ and column $k$ of $D$. Please note, that the updated parameters can be directly applied to readjust the camera settings.

*Example: Lighting Adjustment (Affine RGB Mapping)*

In case of an unknown color distortion function resulting from different lighting conditions a more general mapping should be provided. Clearly, a sophisticated lighting model could be approximated, cf. [KP08], [KFP08], but as we will show in section "Experimental Results - Middlebury Stereo" the application of the affine RGB mapping

$$\mathrm{T}\left(r, g, b, \mathrm{vec}(\boldsymbol{A})^T, \boldsymbol{t}^T\right) = \boldsymbol{A}\begin{pmatrix} r \\ g \\ b \end{pmatrix} + \boldsymbol{t} \qquad (12)$$

within our framework leads to decent results as well. The variable $\boldsymbol{A}$ denotes an arbitrary 3 x 3 matrix, vec(') the row wise vectorization operator and $\boldsymbol{t}$ a translation vector in RGB space. Consequently, the update of the parameter vector $\boldsymbol{p} = (vec(\boldsymbol{A})^T, t^T)^T$ reads as

$$\boldsymbol{p}_{n+1} := \boldsymbol{p}_n + \Delta\lambda \int_{\Omega} \begin{pmatrix} V & 0 & 0 \\ 0 & V & 0 \\ 0 & 0 & V \\ 1 & 0 & 0 \\ 0 & 1 & 0 \\ 0 & 0 & 1 \end{pmatrix} \begin{pmatrix} \alpha_1 \\ \alpha_2 \\ \alpha_3 \end{pmatrix} d\boldsymbol{x}, \qquad (13)$$

where $\boldsymbol{V} = J^T(x + u(\boldsymbol{x}), y)$, $\boldsymbol{0} = (0,0,0)^T$ and the initial parameter vector is the identity mapping $\mathbf{p}_0 = (1, 0, 0, 0, 1, 0, 0, 0, 1, 0, 0, 0)^T$.

**Joint Photometric and Geometric Image Registration**

Considering sections "Globally Optimal Geometric Image Registration" and "Depth-Driven Photometric Image Registration", it can be expected that the geometric image registration results benefit from a given, precise photometric image registration mapping and vice versa. Therefore, we propose to merge both procedures into a joint alternating iterative minimization scheme. Each iteration cycle consists, for example, of a small fixed number of iterations to solve for $u$ and one iteration to solve for **p**. Fig. 1 provides a high level schematic illustration of our depth driven registration pipeline. The input for the registration process is an on-line or recorded stereo image pair or video stream, where the second image is transformed according to the application specific color distortion function. Based on the input image pair, the geometric registration is performed as outlined in section "Globally Optimal Geometric Image Registration". However, instead of iterating until convergence, we only conduct a small fixed number of primal-dual proximal point iterations in order to allow for a joint convergence of geometric and photometric registration. Thereby, we can avoid photometric registration biases caused through the interdependency of both registration processes. Afterwards, we store the intermediate primal and dual variables of the proximal point iteration as initial values for the next input stereo pair and pass a geometrically registered version of the second image to the photometric registration step. There, an update of the color transformation parameter vector of the application specific color distortion model is computed and handed over to the input module in order to update the color transformation mapping for the second image. Depending on the actual use case, the parameter update can be applied to an electronic transformation mapping for off-line processing or directly for the adjustment of camera interface parameters in an on-line setup. Subsequently, the entire procedure is repeated with updated color transformation parameters until the joint convergence of both registration steps. Formally we define the converged state of our algorithm as the drop of energy reduction from one iteration to the next below a certain threshold.

In other words, Fig. 1 illustrates a general schematic illustration of our registration algorithm. The image pair (I, J'), where J' = T(J, **p**) is subject to geometric registration optimization in the first step. In the second step photometric registration is applied to (I, J") with J"(**x**) = J'(**x**+u(**x**), y). A feedback loop takes care about the color adjustment of the input images.

An alternative interpretation of Fig. 1 is as follows. First, a geometric registration from J to J' is performed, followed by a photometric adjustment on the image that is already geometrically registered. Hence, an image pair I, J is registered, with a first image I and a second image J of the image pair (I, J), wherein with a geometric function u(**x**) a geometrically registered second image J' (or, at first, the photometric registration) is generated, which is then, by a

photometric update step $\Delta(\partial E/\partial \mathbf{p})$, converted to a geometrically and photometrically registered second image J". Subsequently, a further iteration may be performed.

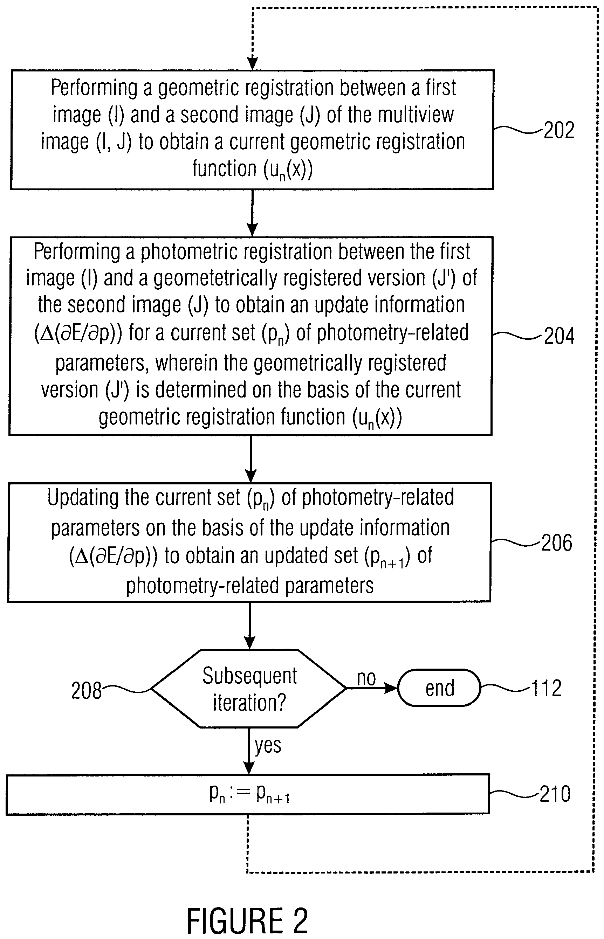

Fig. 2 shows a schematic flow diagram of a method for registering a multiview image. The multiview image comprises a first image I and a second image J. Alternatively, the multiview image may comprise a second image that already is a photometrically transformed version of the original second image J,. in particular in connection with an on-line image acquisition application. In such an on-line application, at least one of the image acquisition devices (e.g., cameras) may be configured for receiving photometry-related parameter settings that modify the image acquisition device's behavior and in consequence lead to a photometry-transformed second image, relative to default photometry-related parameter settings, at an output of the image acquisition device. The multiview image may be stereo image, a stereogram, a frame of a stereo video sequence, or something similar. It may also be possible that the multiview image comprises one or more further images, i.e., a third image, a fourth image, etc. that are related to each other in that they show a common 3D scene from different perspectives.

At a step 202 of the method for registering the multiview image shown in Fig. 2, a geometric registration between the first image I and the second image J of the multiview image is performed to obtain a current geometric representation function $u_n(\mathbf{x})$, wherein n denotes a current iteration of the method for registering the multiview image. In the special case of the first image I and the second image J being related to each other by a stereo-relation, the geometric registration function $u_n(\mathbf{x})$ typically indicates for each pixel in the first image I a lateral distance (caused by the parallactic lateral offset of the first and second images I, J) to an assumed corresponding pixel in the second image J. The correspondence between the pixel in the first image I and the assumed corresponding pixel in the second image J may be more or less correct. The geometric registration typically estimates the geometric registration function $u_n(\mathbf{x})$. In general, the geometric registration function $u_n(\mathbf{x})$ may be understood as a function that maps a pixel position within the first image I to a difference (or a difference vector) that links the pixel position within the first image I to the pixel position of the assumed corresponding pixel in the second image J. The geometric registration function $u_n(\mathbf{x})$ is similar or comparable to a disparity map of the image pair I, J.

At a step 204 of the method for registering the multiview image, a photometric registration is performed between the first image I and a geometrically registered version of the second image J. The geometrically registered version of the second image J may have been determined by applying the geometric registration function $u_n(\mathbf{x})$ obtained at step 202 to the second image J'. The photometric registration is performed in order to obtain an update information $\Delta(\partial E/\partial \mathbf{p})$ for a current set of photometry-related parameters $\mathbf{p}_n$. In the illustrated example of Fig. 2, the update information corresponds to the gradient of the energy functional with respect to the parameters $\mathbf{p}$ multiplied by constant $\Delta$ defining a step size of the update step. However, in other implementations the update information may take other forms. A goal of the photometric registration is to improve the photometric similarity between the first image I and a photometrically transformed version of the second image J, wherein the photometric transformation is performed using the set of photometry-related parameters $\mathbf{p}$ which is applied to the entire second image. Basically, the photometry registration may, for example, attempt to minimize the sum of the photometrical deviations between pixels of the first image I and corresponding pixels in the second image J. As explained above in connection with the geometric registration, it may not be exactly clear which pixel in the second image J corresponds to which pixel in the first image I, because the first image and the second image have different view directions on a common 3D scene that is shown in both the first image I and the second image J. Depending on the distance of the different objects in the 3D scene to the image acquisition devices, a particular feature of an object (e.g., a corner or an edge) is more or less offset in its corresponding pixel position in the second image J; J' with respect to the pixel position in the first image I. The geometric registration function u(x) provides at least an estimation of these pixel correspondences between the first and second images I, and J so that the photometric registration may use this information in order to compare pixels in the first and second images I, J that correspond as much as possible to each other, with respect to the actual real life object feature within the 3D scene.

The current set $\mathbf{p}_n$ of photometry parameters is updated at a step 206 of the method for registering the multiview image. Updating of the current set $\mathbf{p}_n$ of photometry-related parameters is done on the basis of the update information $\Delta(\partial E/\partial \mathbf{p})$ and provides an updated set $\mathbf{p}_{n+1}$ of photometry-related parameters.

At a step 208 a determination is made whether a subsequent iteration shall be performed or not. The determination may be based on a convergence criterion of the geometric registration and/or of the photometric registration. In case no significant change of the geometric update function u(x) and/or the photometry-related parameters $\mathbf{p}_n$ can be observed anymore from one iteration to another iteration, it may typically be assumed that the method has sufficiently converged. The decision of whether a change shall be considered to be significant or not may be made on the basis of a threshold value.

In case the subsequent iteration shall be performed, the method continues at a step 210 of the method in which the updated set $\mathbf{p}_{n+1}$ of parameters replaces the current set $\mathbf{p}_n$, according to $\mathbf{p}_{n+1} := \mathbf{p}_n$. In this manner, the subsequent iteration may be performed with the updated parameter set $\mathbf{p}_{n+1}$ which is believed to lead to better results of the geometric registration which is performed at step 202 of the subsequent iteration.

In case the determination made at step 208 indicates that no subsequent iteration shall be performed, the method ends at step 212. Alternatively, the method may continue with, for example, a post-processing of the multiview image or of result data of the method for registering the multiview image, such as a disparity map.

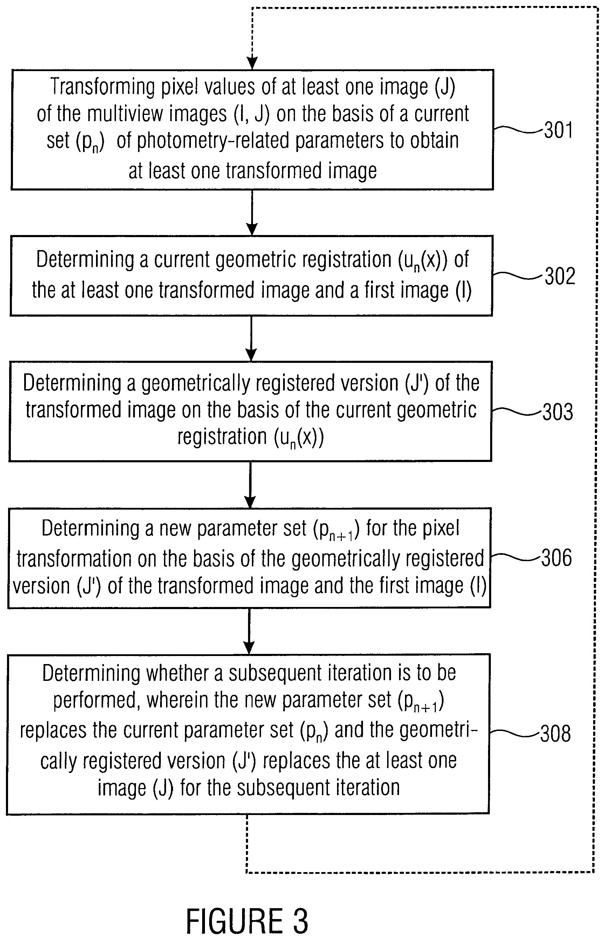

Fig. 3 shows a schematic flow diagram of another possible method for registering a multiview image. Fig. 3 basically shows one iteration of the method for registering a multiview image. The method comprises a step 301 of transforming pixel values of at least one image J of the multiview image on the basis of a current set $\mathbf{p}_n$ of photometry-related parameters to obtain at least one transformed image. The current set $\mathbf{p}_n$ of photometry-related parameters may be a result of a preceding iteration or it may, for example of the very first set $\mathbf{p}_0$, correspond to a default setting.

At a step 302 of the method for registering the multiview image a current geometric registration $u_n(\mathbf{x})$ of the at least one transformed image and a first image I is determined. The first image I also belongs to the multiview image. Details of the geometric registration process have been described above and are in principle also applicable to the method for registering schematically illustrated in Fig. 3.

A geometrically registered version of the second image J is then determined at a step 303 of the method. The determination of the geometrically registered version of the second image J is done on the basis of the current geometric registration function $u_n(\mathbf{x})$.

At a step 306 of the method for registering a multiview image shown in Fig. 3 a new parameter set $\mathbf{p}_{n+1}$ for the pixel transformation is determined on the basis of the geometrically registered version of the second image J.

The method for registering further comprises a step 308 of determining whether a subsequent iteration is to be performed. If so, the new parameter set $\mathbf{p}_{n+1}$ replaces the current parameter set $\mathbf{p}_n$. Furthermore, the geometrically registered version of the second image J replaces the second image J for the subsequent iteration. Thus, the intermediate results obtained during an iteration are reused as a start value during the subsequent iteration. The geometric registration and the photometric registration are performed in an alternating manner, i.e. one step or a limited number steps of the geometric iteration, and then one step or a limited number of steps of the photometric registration (step 306: determining a new parameter set $\mathbf{p}_n$). As indicated by the dashed line, the method may then return to step 301 in order to perform the subsequent iteration.

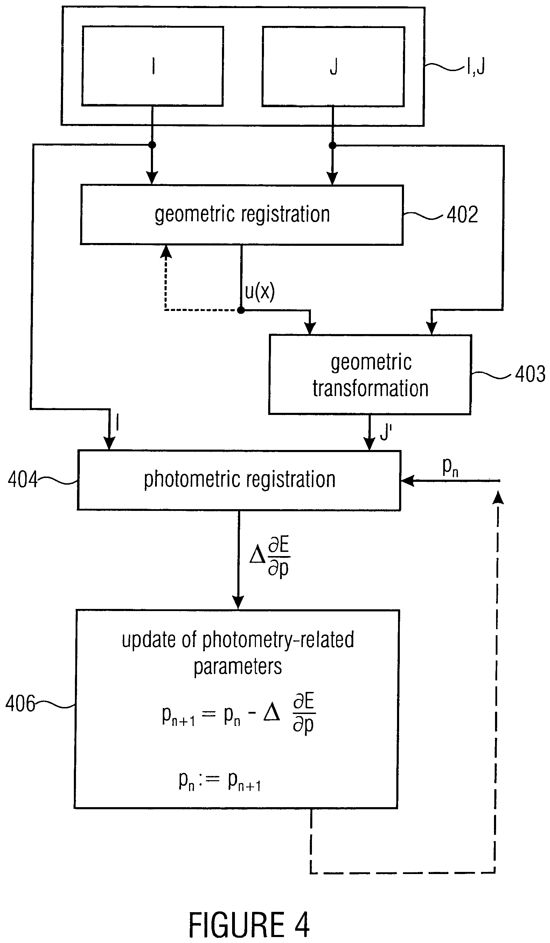

Fig. 4 shows a schematic block diagram for illustrating a joint geometric and photometric registration of a multiview image I, J. The multiview image comprises a first image I and a second image J. Without loss of generality, the first image I may be assumed to be a left image of a stereogram and the second image J may be assumed to be the right image of the same stereogram. Alternatively, the multiview image may be a frame of a 3D video sequence, or a pair of images captured by two or more image acquisition devices.

The first image I and the second image J are provided to a geometric registration 402. The geometric registration 402 attempts to find corresponding pixels in the first image I and the second image J. Due to the different perspectives or view directions onto a 3D scene depicted by the first image I and the second image J of the multiview image, a particular feature of an object within the 3D scene (e.g., a corner or an edge) may appear at different pixel positions within the first image I and the second image J. The geometric registration tries to identify pairs of corresponding pixels by evaluating pixel values (e.g., color) and/or neighborhood relations. This task is rendered more difficult if the first image I differs from the second image J with respect to photometric representation. To give an example: A purple object may be represented with a red cast in the first image I, but with a blue cast in the second image J. The geometric registration is typically made more difficult by this difference of color representation in the first and second images, which in the end may result in errors in a disparity map that may be generated on the basis of the results of the geometric registration.

The geometric registration 402 generates a geometric registration function $u(\mathbf{x})$ which is provided to a geometric transformation 403. The second image J is provided as a second input to the geometric transformation 403. Using the geometric registration function $u(\mathbf{x})$, the second image J is geometrically transformed to a geometrically transformed version J' of the second image J. In the geometrically transformed version J' the pixel positions are, for example, shifted to the pixel position of the assumed corresponding pixel in the first image I. In this manner, the geometrically transformed version J' of the second image J is more or less congruent to the first image I, at least as far as possible given the exactitude of current geometric registration. Note however, that the geometric transformation 403 is optional because the geometric registration function may be used by a subsequent blocks 404 directly without actually performing the geometric transformation of the second image J.

As indicated by the dashed arrow leading back to the geometric registration, the geometric registration function $u(\mathbf{x})$ may be used in an iterative manner during a subsequent iteration. Accordingly, the geometric registration function $u(\mathbf{x})$ may be stored until it is used during the subsequent iteration.

According to the example schematically illustrated in Fig. 4, the geometrically transformed version J' of the second image J is provided as an input to a photometric registration 404. The photometric registration 404 further receives the first image I and a current set $\mathbf{p}_n$ of photometry-related parameters. Internally, the photometric registration 404 may photometrically transform the geometrically transformed version J' by means of the current set $\mathbf{p}_n$ of photometry-related parameters. In this manner, the photometric registration 404 may determine remaining deviations between the first image I and the second image J after the latter has been geometrically and photometrically transformed using the geometrical registration function $u(\mathbf{x})$ and the current set $\mathbf{p}_n$ of photometry-related parameters.

The photometric registration 404 provides an update information $\Delta(\partial E/\partial\mathbf{p})$ which is used as an input for an update 406 of the photometry-related parameters: $\mathbf{p}_{n+1} = \mathbf{p}_n - \Delta(\partial E / \partial\mathbf{p})$. In other words, the set of photometry-related parameters is modified in the direction of the negative gradient of the energy functional with respect to the set of parameters $\mathbf{p}$. The magnitude of the update step is also determined by a step size $\Delta$. Then the updated set $\mathbf{p}_{n+1}$ assumes the role of the current set of parameters for the subsequent iteration: $\mathbf{p}_n := \mathbf{p}_{n-1}$. As indicated by the dashed arrow from the update 406 to the photometric registration 404, the set of parameters that has been determined by the update 406 may be fed back to the photometric registration as a start value for the next iteration. In this manner a gradual improvement of the photometric registration may be expected.

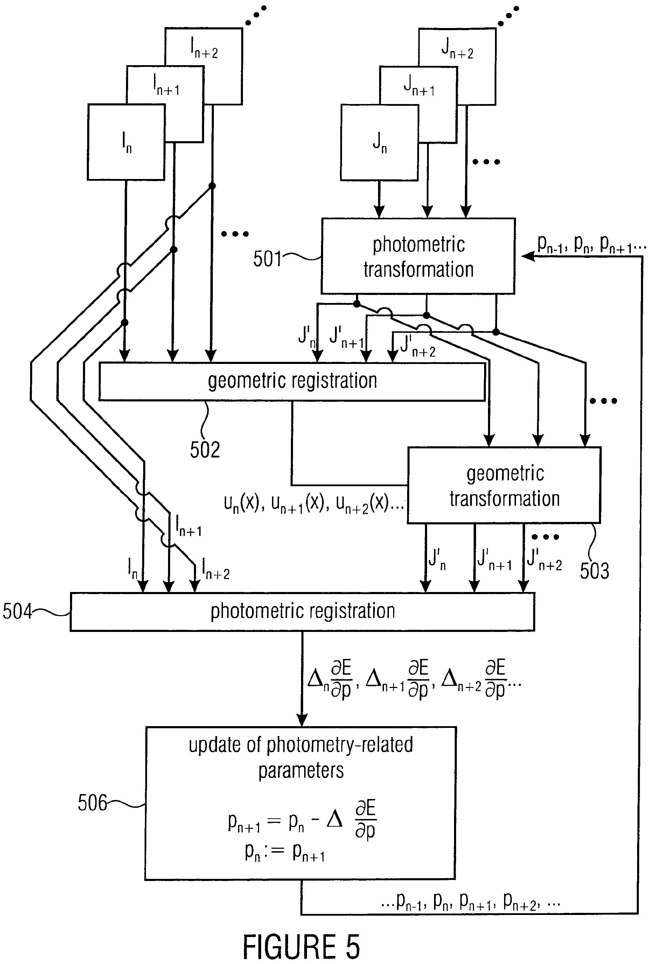

Fig. 5 shows a schematic block diagram illustrating the joint geometric and photometric registration of a sequence of multiview image, e.g. a 3D video stream. The sequence of multiview images comprises first images $I_n$, $I_{n+1}$, $I_{n+2}$ ... and corresponding second images $J_n$, $J_{n+1}$, $J_{n+2}$ ... . The second images $J_n$, $J_{n+1}$, $J_{n+2}$ ... undergo a photometric transformation 501 which is controlled by sets $p_{n-1}$, $p_n$, $p_{n+1}$, ... of photometry-related parameters. Typically, the set $p_{n-1}$ that is used by the photometric registration during a current iteration n was determined during a preceding iteration n-1 (or provided as a default set $p_0$). Note that the three arrows leading from the second images $J_n$, $J_{n+1}$, $J_{n+2}$ to the photometric transformation 501 indicate that per iteration one of the second images $J_n$, $J_{n+1}$, $J_{n+2}$ is provided to the photometric transformation 501. In other words, during each iteration, the photometric transformation typically processes one of the second images $J_n$, $J_{n+1}$, $J_{n+2}$ that corresponds to the current iteration.

The photometric transformation 501 transforms the second images $J_n$, $J_{n+1}$, $J_{n+2}$ in photometrically transformed versions of the second images $J_n$, $J_{n+1}$, $J_{n+2}$ which are then provided to a geometric registration 502. During each iteration, the geometric registration 502 further receives one of the first images $I_n$, $I_{n+1}$, $I_{n+2}$. By comparing the first image $I_n$, $I_{n+1}$, $I_{n+2}$ with the corresponding photometrically transformed version of the second images $J_n$, $J_{n+1}$, $J_{n+2}$, a geometric registration function $u_n(\mathbf{x})$, $u_{n+1}(\mathbf{x})$, $u_{n+2}(\mathbf{x})$ can be determined or estimated.

In the following description of Fig. 5, only the current iteration n will be described, for the sake of clarity.

The photometrically transformed version of the second image $J_n$ is then provided as an input a geometric transformation 503. The geometric transformation 503 also receives the geometric registration function $u_n(\mathbf{x})$ as another input. Using the geometric registration function $u_n(\mathbf{x})$, the geometric transformation 503 determines a geometrically transformed version $J'_n$ of the second image $J_n$.

A photometric registration 504 receives the first image $I_n$ and the geometrically transformed version $J'_n$ as inputs. By comparing the geometrically transformed version $J'_n$ and the first image $I_n$ with respect to photometry-related deviations, the photometric registration 504 may then determine an update information $\Delta(\partial E_n/\partial\mathbf{p_n})$ for the current set $\mathbf{p}_n$ of photometry-related parameters. Eventually, a geometrically and photometrically registered second image J" may be obtained by corresponding conversions.

The photometric registration 504 provides an update information $\Delta(\partial E/\partial\mathbf{p})$ which is used as an input for an update 506 of the photometry-related parameters: $\mathbf{p}_{n+1} = \mathbf{p}_n - \Delta(\partial E / \partial\mathbf{p})$. In other words, the set of photometry-related parameters is modified in the direction of the negative gradient of the energy functional with respect to the set of parameters $\mathbf{p}$. The magnitude of the update step is also determined by a step size $\Delta$. Then the updated set $\mathbf{p}_{n+1}$ assumes the role of the current set of parameters for the subsequent iteration: $\mathbf{p}_n := \mathbf{p}_{n-1}$. As indicated by the dashed arrow from the update 506 to the photometric transformation 501, the set of parameters that has been determined by the update 506 may be fed back to the photometric transformation 501 for the next iteration in order to photometrically transform the subsequent second image $J_{n+1}$. It is expected that the photometric registration of the photometrically transformed version of the subsequent second image $J_{n+1}$ during the iteration n+1 is improved compared to the previous iteration n. Therefore, it may be expected that the geometric registration 502 also benefits from the improved photometric registration during the subsequent iteration n+1, and even more during further subsequent iterations n+2, n+3, ....

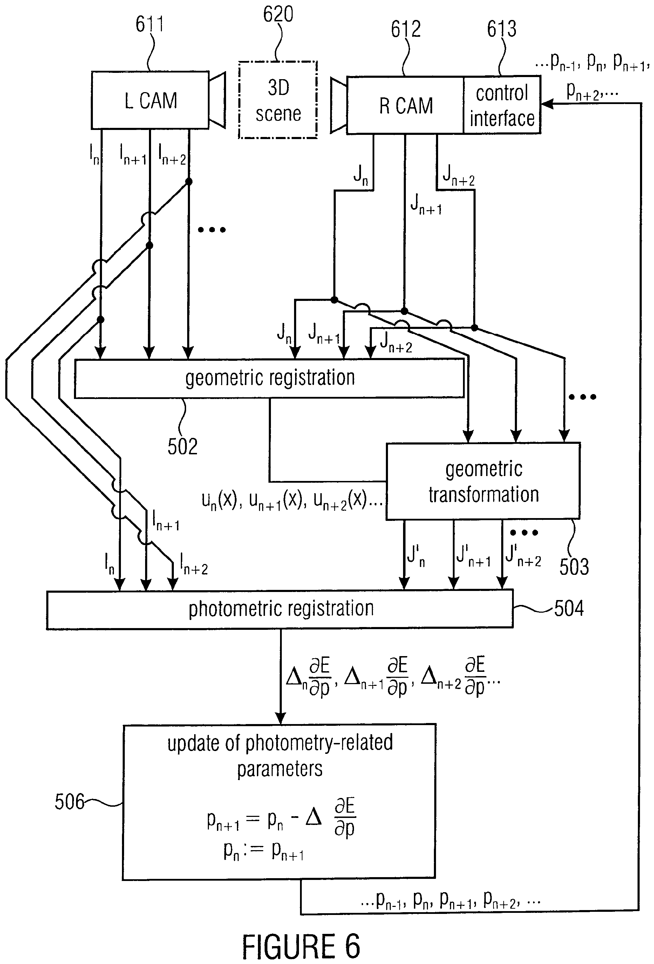

Fig. 6 shows a schematic block diagram illustrating an online adjustment of an image acquisition device 612. Some parts of Fig. 6 are similar or identical to corresponding parts shown in Fig. 5 so that the same reference signs have been used for such parts. For these identical or corresponding parts the description and explanation of Fig. 5 are therefore, in principle, applicable to the schematic block diagram shown in Fig. 6, as well.

A first image acquisition device 611 and a second image acquisition device 612 both capture the same 3D scene 620 from different viewing directions. The first and second image acquisition devices 611, 612 may be, for example, digital cameras (left camera "L CAM" and right camera "R CAM") or the two image acquisition systems (optics, imager chip, read-out electronics, ...) of a digital stereo camera. Other image acquisition devices are also possible.

The second image acquisition device 612 comprises a control interface 613 that is configured to receive a set $\mathbf{p}$ of photometry-related parameters. Using the set $\mathbf{p}$ of photometry-related parameters, the image acquisition device 612 may modify its acquisition parameters, such as imager chip bias voltages, reference voltages for analog-to-digital conversion, weighting of color channels, etc.

The set $\mathbf{p}$ of photometry-related parameters is provided by the update of photometry-related parameters 506 described in connection with Fig. 5. Typically, the update of photometry-related parameters 506 provides a new set $\mathbf{p}$ of parameters for a subsequent iteration and hence for a subsequent frame produced by the image acquisition device 612. Depending on the frame rate of the image acquisition device 612, one iteration of the joint geometric and photometric registration may span several frames produced by the image acquisition device 612. In this case, the image acquisition device may apply the new set **p** of photometry-related parameters as the new set **p** becomes available.

**Experimental Results**

In the following, we demonstrate the performance of our registration algorithm for two different kinds of applications and three different datasets. Section "Video communication with Virtual Eye Contact" compares the application of our method to consistent multi-view white balancing with an individual gray card based manual approach. Section "3D Video" evaluates the white balancing performance of our algorithm with a professionally recorded and photometrically adjusted stereo video sequence that is considered as ground truth. Finally, section "Middlebury Stereo" discuss the correction for different lighting conditions for an image pair of the Middlebury *Aloe* dataset.

*Video-communication with Virtual Eye Contact*

In standard monocular point to point video-communication systems the conferees usually look at the screen while being recorded from a camera beside or above the display. One possibility to preserve eye contact is to use more than one camera, perform a 3D scene analysis and render a synthetic view for a camera which is located at the position of the screen where the conferee is looking at, cf. [SFA_08], [WASF11], [WFS11]. Because of occlusions it is beneficial to use texture information from different cameras for view synthesis. However, user acceptance is directly linked to a good photometric alignment. In the following, we present the results of a typical setup for the eye contact preserving video-communication system depicted in figure 1 which is equipped with three synchronized AVT Pike 210C firewire cameras.

The system setup requires a consistent white balance for all cameras. To illustrate the advantages of our registration algorithm we compare a carefully performed manual color adjustment with our proposed method. Although we rely here on off-line results, please note that our algorithm allows a fully automatic, real-time and on-line color registration which is of great importance for video-communication applications.

Results of a manual gray card based individual white balancing for two cameras are illustrated as color photographies in the article "Depth-Driven Photometric and Geometric Image Registration for Real-Time Stereo Systems" by W. Waizenegger, I. Feldmann, and P. Eisert, Vision, Modeling, and Visualization (2011), available under iphome.hhi.de/eisert/papers/vmv2011d.pdf. Figure 3 in this article shows tesults for a manual gray card based individual white balancing. In Figure 3 of the Waizenegger et al. article, it can be seen that the image pair suffers from clearly visible color deviations. Moreover, the left image of Figure 4 of the Waizenegger et al. article shows that view synthesis based on these input images leads to visually unpleasant results. The outcome after a post-processing according to the proposed joint white balance adjustment in section "Example: On-Line White Balance Registration (RGB Translation)" is illustrated in the right image of Figure 4 in the article by Waizenegger et al.. In contrast to the synthesis based on the manually configured color settings the automatically registered synthesis does not possess visual discomfort. In particular, Figure 4 in said article shows two closeups of view synthesis based on the scene in Figure 3 in said article. Both syntheses are composed from the left image of Figure 3 on the left of the red line and from the right image on the right of the red line. The left synthesis is performed from the original colors and the right after a post-processing with our registration algorithm.

*3D Video*

In recent years, the movie industry and television broadcasters got raising interest in 3D video acquisition technology. The correct and consistent alignment of photometric properties among cameras is of great importance for this field of application. In the following, we use a professionally recorded and photometrically aligned high definition (HD) stereo sequence as ground truth dataset for the evaluation of our registration process. For this purpose, we synthetically introduce a wrong white balancing as illustrated in Figure 5 of the above mentioned article by Waizenegger et al. ("Depth-Driven Photometric and Geometric Image Registration for Real-Time Stereo Systems" by W. Waizenegger, I. Feldmann, and P. Eisert, Vision, Modeling, and Visualization (2011), available under iphome.hhi.de/eisert/papers/vmv2011d.pdf). In particular, Figure 5 of said article shows: Left and right image of a professionally recorded and photometrically aligned stereo sequence. Top: Original left image. Bottom: Right image with a synthetic wrong white balancing.

After a correction according to section "Example: On-Line White Balance Registration (RGB Translation)" the impact on view synthesis is shown in Figure 6 of the article by Waizenegger et al.. In particular, Figure 6 in said article shows: View synthesis based on the scene in figure 5. Both syntheses are composed from the left image of figure 5 on the left of the red line and from the right image on the right of the red line. The synthesis on top is based on the synthetically deviated colors and the synthesis on the bottom is performed after a correction with our registration algorithm. It can be clearly seen that the results for the uncorrected image contain an unpleasant color transition while despite the originally huge color differences there is no recognizable color border in the corrected version. Moreover, the mean relative numerical error for the estimated color transformation parameter vector is significantly below one percent which proves that our registration algorithm converged to the original state. Finally, as it is of great interest for view generation for 3D displays we illustrate the impact on disparity estimation obtained during the geometric image registration step.

As depicted in Figure 7 of the article by Waizenegger et al., the quality of disparity estimation remarkably improves after the joint photometric and geometric registration procedure. In particular, Figure 7 of said article shows: Disparities obtained from the globally optimal geometric image registration step. Top: Result for uncorrected colors. Bottom: Result after registration with the proposed method.

*Middlebury Stereo*

In the following, we demonstrate the correction for different lighting conditions for the Middlebury *Aloe* stereo dataset [HS07]. It provides seven views taken under three different lighting conditions and three different exposure times. We selected *view 0 illumination 1 exposure 1* and *view 1 illumination 2 exposure 1* for our evaluation as illustrated in Figure 8 in the article by Waizenegger et al.. The color registration function is chosen according to section "Example: Lighting Adjustment (Affine RGB Mapping)". Despite the very different lighting conditions the outcome of our registration algorithm is visually quite appealing as can be seen in Figure 9 of above mentioned article. Figure 9 of said article shows a view synthesis based on the scene in Figure 8. Both syntheses are composed from the left image of Figure 8 on the left of the red line and from the right image on the right of the red line. The synthesis on top is based on original colors and the synthesis on the bottom is performed after a correction with our registration algorithm. The view synthesis based on the original images clearly suffers from inconsistent colors while the synthesis after photometric registration looks very natural. Analogously to section "Video-Communication with Virtual Eye Contact", we additionally inspect the impact of our registration process on the disparity estimation in the geometric registration step as illustrated in Figure 10 of the article by Waizenegger et al.. Likewise to section "3D Video" the outcome clearly improves after applying our joint photometric and geometric registration process.

**Conclusion**

In the foregoing description we presented a novel method for high accuracy joint photometric and geometric stereo image registration. We proposed a consistent, elegant and efficient real-time capable optimization framework based on an energy formulation of the registration problem. Our work extends the variational formulation for disparity estimation presented in [PSG_08] with regard to improved color insensitivity and robustness. Besides off-line post-processing of stereo images, it can be seen as a valuable algorithm for the on-line setup. of stereo cameras used for disparity estimation. Simultaneously, we were able to show in our experimental results, that the optimization procedure is directly linked to the performance of disparity estimation and the visual quality of multi-view view synthesis. The potential of our algorithmic development has been successfully demonstrated by the evaluation with two different applications and three different datasets.

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus. Some or all of the method steps may be executed by (or using) a hardware apparatus, like for example, a microprocessor, a programmable computer or an electronic circuit. In some embodiments, some one or more of the most important method steps may be executed by such an apparatus.

The inventive encoded signals mentioned above can be stored on a digital storage medium or can be transmitted on a transmission medium such as a wireless transmission medium or a wired transmission medium such as the Internet.

Depending on certain implementation requirements, embodiments of the invention can be implemented in hardware or in software. The implementation can be performed using a digital storage medium, for example a floppy disk, a DVD, a Blu-Ray, a CD, a ROM, a PROM, an EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may for example be stored on a machine readable carrier.

Other embodiments comprise the computer program for performing one of the methods described herein, stored on a machine readable carrier.

In other words, an embodiment of the inventive method is, therefore, a computer program having a program code for performing one of the methods described herein, when the computer program runs on a computer.

A further embodiment of the inventive methods is, therefore, a data carrier (or a digital storage medium, or a computer-readable medium) comprising, recorded thereon, the computer program for performing one of the methods described herein. The data carrier, the digital storage medium or the recorded medium are typically tangible and/or non-transitionary.

A further embodiment of the inventive method is, therefore, a data stream or a sequence of signals representing the computer program for performing one of the methods described herein. The data stream or the sequence of signals may for example be configured to be transferred via a data communication connection, for example via the Internet.

A further embodiment comprises a processing means, for example a computer, or a programmable logic device, configured to or adapted to perform one of the methods described herein.

A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver .

In some embodiments, a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The above described embodiments are merely illustrative for the principles of the present invention. It is understood that modifications and variations of the arrangements and the details described herein will be apparent to others skilled in the art. It is the intent, therefore, to be limited only by the scope of the impending patent claims and not by the specific details presented by way of description and explanation of the embodiments herein.

References:

[Bar08] BARTOLI A.: Groupwise geometric and photometric direct image registration. Pattern Analysis and Machine Intelligence, IEEE Transactions on 30, 12 (2008), 2098-2108.

[CSZ09] CHAKRABARTI A., SCHARSTEIN D., ZICKLER T.: An empirical camera model for internet color vision. In British Machine Vision Conference (BMVC 2009) (London, UK, 2009).

[FSC98] FINLAYSON G. D., SCHIELE B., CROWLEY J. L.: Comprehensive colour image normalization. In Proceedings of the 5th European Conference on Computer Vision-Volume I - Volume I (London, UK, 1998), ECCV '98, Springer-Verlag, p. 475-490. ACM ID: 649067.

[GN03] GROSSBERG M. D., NAYAR S. K.: Determining the camera response from images: What is knowable? IEEE Transactions on Pattern Analysis and Machine Intelligence 25, 11 (2003), 1455-1467.

[HLL08] HEO Y. S., LEE K. M., LEE S. U.: Illumination and camera invariant stereo matching. In Computer Vision and Pattern Recognition, 2008. CVPR 2008. IEEE Conference on (2008), pp. 1-8.

[HS07]HIRSCHMULLER H., SCHARSTEIN D.: Evaluation of cost functions for stereo matching. In CVPR07 (2007), pp. 1-8.

[HS09]HIRSCHMÜLLER H., SCHARSTEIN D.: Evaluation of stereo matching costs on images with radiometric differences. IEEE Transactions on Pattern Analysis and Machine Intelligence 31, 9 (2009), 1582-1599.

[IW05]ILIE A., WELCH G.: Ensuring color consistency across multiple cameras. In Computer Vision, 2005. ICCV 2005. Tenth IEEE International Conference on (2005), vol. 2, pp. 1268-1275 Vol. 2.

[KFP08] KIM S. J., FRAHM J., POLLEFEYS M.: Radiometric calibration with illumination change for outdoor scene analysis. In Computer Vision and Pattern Recognition, 2008. CVPR 2008. IEEE Conference on (2008), pp. 1-8

[KP08]KIM S. J., POLLEFEYS M.: Robust radiometric calibration and vignetting correction. Pattern Analysis and Machine Intelligence, IEEE Transactions on 30, 4 (2008), 562-576.

[KSP_10] KETTERN M., SCHNEIDER D. C., PRESTELE B., ZILLY F., EISERT P.: Automatic acquisition of Time-Slice image sequences. In Visual Media Production, Conference for (Los Alamitos, CA, USA, 2010), vol. 0, IEEE Computer Society, pp. 40-48.

[PSG_08] POCK T., SCHOENEMANN T., GRABER G., BISCHOF H., CREMERS D.: A convex formulation of continuous Multi-Label problems. In European Conference on Computer Vision (ECCV) (Marseille, France, Oct. 2008).

[RSYD05] RAMANATH R., SNYDER W., YOO Y., DREW M.: Color image processing pipeline. Signal Processing Magazine, IEEE 22, 1 (2005), 34-43.

[SFA_08] SCHREER O., FELDMANN I., ATZPADIN N., EISERT P., KAUFF P., BELT H.: 3DPresence -A system concept for Multi-User and Multi-Party immersive 3D videoconferencing. In Visual Media Production (CVMP 2008), 5th European Conference on (2008), p. 1-8.

[WASF11] WAIZENEGGER W., ATZPADIN N., SCHREER O., FELDMANN I.: Patch-Sweeping with robust prior for high precision depth estimation in real-time systems. In Proc. International Conference on Image Processing (ICIP 2011) a(Brussels, Belgium, 2011).

[WFS11] WAIZENEGGER W., FELDMANN I., SCHREER O.: Real-time patch sweeping for high-quality depth estimation in 3D videoconferencing applications. In Proc. of Real-Time Image and Video Processing (San Francisco, California, United States, 2011).

[WYD07] WANG L., YANG R., DAVIS J. E.: BRDF invariant stereo using light transport constancy. IEEE Transactions on Pattern Analysis and Machine Intelligence 29, 9 (2007), 1616-1626.

[ZMEK10] ZILLY F., MUELLER M., EISERT P., KAUFF P.: Joint estimation of epi-polar geometry and rectification parameters using point correspondences for stereoscopic TV sequences. In 3DPVT10 (2010).

**Claims**

1. Method for registering a multiview image (I, J) provided by at least a first image acquisition device and a second image acquisition device, the method comprising:

    controlling the second image acquisition device using a current set ($p_n$) of photometric parameters during a current iteration to provide a second image;

    performing (202; 502) a geometric registration between a first image (I) and the second image (J) of the multiview image (I, J) to obtain a current geometric registration function ($u_n(x)$);

    performing (204; 504) a photometric registration between the first image (I) and a geometrically registered version of the second image (J) to obtain an update information ($\Delta(\partial E / <\partial p)$) for the current set ($p_n$) of photometric parameters, wherein the geometrically registered version is determined on the basis of the current geometric registration function ($u_n(x)$), wherein the geometric registration and the photometric registration are part of an overall registration process that is formulated in terms of an alternating energy minimization procedure, and wherein a geometric registration energy and a photometric registration energy are incorporated into a joint continuous energy functional;

    updating (206; 506) the current set ($p_n$) of photometric parameters on the basis of the update information ($\Delta(\partial E / \partial p)$) to obtain an updated set ($p_{n+1}$) of photometric parameters;

    repeating, with the updated set ($p_{n+1}$) of photometric parameters, the geometric registration and the photometric registration, wherein the second image acquisition device is controlled to use the updated set ($p_{n+1}$) of photometric parameters during the subsequent iteration, so that a new second image corresponding to the subsequent iteration is acquired with the updated set ($p_{n+1}$) of photometric parameters.

2. Method according to claim 1,
wherein the geometric registration comprises evaluating a partial differential of the continuous energy function with respect to the geometric registration function ($u(x)$); and wherein the photometric registration comprises evaluating a partial differential of the continuous energy function with respect to the set ($p$) of photometry-related parameters.

3. Method according to claim 1 or 2, wherein the geometric registration comprises a primal dual proximal optimization.

4. Method according to any one of claim 1 to 3, wherein the geometric registration comprises performing at least one minimization step of a minimization task with respect to the geometric registration function ($u(x)$) and a variational problem given by

$$\min_{u} \left\{ \int_{\Omega} |\nabla u(x)| + \lambda \, AD(u,x,I,J) dx \right\},$$

wherein

$\Omega$ is the image domain,
$\nabla u(\mathbf{x})$ is the total variation of u,
$\lambda$ is a weighting scalar, and
AD(u, $\mathbf{x}$, I, J) are absolute differences defined as

$$AD(u,x,I,J) = \sum_{i=c_1}^{c_m} \left| I^i(x) - J^i(x+u(x),y) \right|,$$

with $c_1$ to $c_m$ relating to a m-dimensional color space.

**5.** Method according to anyone of claims 1 to 4, wherein the geometric registration is based on a convexification of a minimization task with respect to the geometric registration function (u($\mathbf{x}$)) and a variational problem given by

$$\min_{u} \left\{ \int_{\Omega} |\nabla u(x)| + \lambda \, AD(u,x,I,J) dx \right\},$$

wherein

$\Omega$ is the image domain,
$\nabla u(\mathbf{x})$ is the total variation of u,
$\lambda$ is a weighting scalar, and
AD(u, $\mathbf{x}$, I, J) are absolute differences defined as

$$AD(u,x,I,J) = \sum_{i=c_1}^{c_m} \left| I^i(x) - J^i(x+u(x),y) \right|,$$

with $c_1$ to $c_m$ relating to a m-dimensional color space

**6.** Method according to claim 5, wherein the convexification is performed via functional lifting.

**7.** Method according to anyone of claims 1 to 6, wherein the multiview images correspond to a frame of a sequence of multiview images, wherein at least one of the geometric registration function (u($\mathbf{x}$)) and the updated set ($\mathbf{p}_{n+1}$) determined for a first frame are used as a starting point for at least one of the geometric registration and the photometric registration of a subsequent second frame.

**8.** Computer program for implementing the method of any one of claims 1 to 7 when being executed on a computer or signal processor.

**9.** Multiview image registration apparatus comprising:

an input for receiving a multiview image (I, J) from at least a first image acquisition device and a second image acquisition device;

a geometric registration unit for geometrically registering a first image (I) and a second image (J) of the multiview image (I, J) to obtain a current geometric registration function ($u_n(\mathbf{x})$);

a photometric registration unit for photometrically registering the first image (I) and a geometrically registered version (J') of the second image (J) to obtain an update information ($\Delta(\partial E/\partial \mathbf{p})$) for a current set ($\mathbf{p}_n$) of photometric parameters, wherein the geometrically registered version (J') of the transformed image is determined on the basis of the current geometric registration function ($u_n(\mathbf{x})$), wherein the geometric registration and the photometric registration are part of an overall registration process that is formulated in terms of an alternating energy minimization procedure, and wherein a geometric registration energy and a photometric registration energy are incorporated into a joint continuous energy functional;

an updating unit for updating the current set ($\mathbf{p}_n$) of photometric parameters on the basis of the update information ($\Delta(\partial E/\partial \mathbf{p})$) to obtain an updated set ($\mathbf{p}_{n+1}$) of photometric parameters; and

an iteration unit for conditionally controlling the geometric registration unit and the photometric registration unit to perform a subsequent iteration with the updated set ($\mathbf{p}_{n+1}$) of photometric parameters; and

a controller for controlling the second image acquisition device using the current set ($\mathbf{p}_n$) of photometric parameters during a current iteration for controlling the second image acquisition device using the updated set ($\mathbf{p}_{n+1}$) of photometric parameters during the subsequent iteration, so that a new second image corresponding to the subsequent iteration is acquired with the updated set ($\mathbf{p}_{n+1}$) of photometric parameters.

10. Multiview image registration apparatus according to claim 9,

wherein the geometric registration unit is further configured for evaluating a partial differential of the continuous energy function with respect to the geometric registration function ($u(\mathbf{x})$); and

wherein the photometric registration unit is further configured for evaluating a partial differential of the continuous energy function with respect to the set ($\mathbf{p}$) of photometry-related parameters.

11. Multiview image registration apparatus according to any one of claims 9 or 10, wherein the geometric registration comprises a primal dual proximal optimization.

12. Multiview image registration apparatus according to any one of claim 9 to 11, wherein the geometric registration unit is further configured for performing at least one minimization step of a minimization task with respect to the geometric registration function ($u(\mathbf{x})$) and a variational problem given by

$$\min_u \left\{ \int_\Omega |\nabla u(\boldsymbol{x})| + \lambda \, \mathrm{AD}(u, \boldsymbol{x}, I, J) d\boldsymbol{x} \right\},$$

wherein

$\Omega$ is the image domain,
$\nabla u(\mathbf{x})$ is the total variation of u,
$\lambda$ is a weighting scalar, and
AD(u, $\mathbf{x}$, I, J) are absolute differences defined as

$$\mathrm{AD}(u, \boldsymbol{x}, I, J) = \sum_{i=c_1}^{c_m} \left| I^i(\boldsymbol{x}) - J^i(\boldsymbol{x} + u(\boldsymbol{x}), y) \right|,$$

with $c_1$ to $c_m$ relating to a m-dimensional color space.

**13.** Multiview image registration apparatus according to anyone of claims 9 to 12, wherein the geometric registration is based on a convexification of a minimization task with respect to the geometric registration function (u(**x**)) and a variational problem given by

$$\min_{u}\left\{\int_{\Omega}|\nabla u(\pmb{x})|+\lambda\,\mathrm{AD}(u,\pmb{x},I,J)d\pmb{x}\right\},$$

wherein

$\Omega$ is the image domain,
$\nabla u(\mathbf{x})$ is the total variation of u,
$\lambda$ is a weighting scalar, and
AD(u, **x**, I, J) are absolute differences defined as

$$\mathrm{AD}(u,x,I,J)=\sum_{i=c_1}^{c_m}\left|I^i(x)-J^i(x+u(x),y)\right|,$$

with $c_1$ to $c_m$ relating to a m-dimensional color space.

**14.** Multiview image registration apparatus according to anyone of claims 9 to 13, wherein the multiview images correspond to a frame of a sequence of multiview images, wherein at least one of the geometric registration function (u(**x**)) and the updated set ($\mathbf{p}_{n+1}$) determined for a first frame are used as a starting point for at least one of the geometric registration and the photometric registration of a subsequent second frame.

**Patentansprüche**

**1.** Verfahren zum Ausrichten eines Mehransichtsbildes (I, J), das durch zumindest eine erste Bilderfassungsvorrichtung und eine zweite Bilderfassungsvorrichtung bereitgestellt wird, wobei das Verfahren folgende Schritte aufweist:

Steuern der zweiten Bilderfassungsvorrichtung unter Verwendung eines aktuellen Satzes ($\mathbf{p}_n$) von photometrischen Parametern während einer aktuellen Iteration, um ein zweites Bild bereitzustellen;
Durchführen (202; 502) einer geometrischen Ausrichtung zwischen einem ersten Bild (I) und dem zweiten Bild (J) des Mehransichtsbildes (I, J), um eine aktuelle Geometrische-Ausrichtung-Funktion ($u_n(\mathbf{x})$) zu erhalten;
Durchführen (204; 504) einer photometrischen Ausrichtung zwischen dem ersten Bild (I) und einer geometrisch ausgerichteten Version des zweiten Bildes (J), um Aktualisierungsinformationen ($\Delta(\partial E/\partial\mathbf{p})$) für den aktuellen Satz ($\mathbf{p}_n$) von photometrischen Parametern zu erhalten, wobei die geometrisch ausgerichtete Version auf der Basis der aktuellen Geometrische-Ausrichtung-Funktion ($u_n(\mathbf{x})$) bestimmt wird, wobei die geometrische Ausrichtung und die photometrische Ausrichtung Teil eines Gesamtausrichtungsprozesses sind, der bezüglich einer Prozedur einer abwechselnden Energieminimierung formuliert wird, und wobei eine Geometrische-Ausrichtung-Energie und eine Photometrische-Ausrichtung-Energie in ein gemeinsames kontinuierliches Energiefunktional integriert werden;
Aktualisieren (206; 506) des aktuellen Satzes ($\mathbf{p}_n$) von photometrischen Parametern auf der Basis der Aktualisierungsinformationen ($\Delta(\partial E/\partial\mathbf{p})$), um einen aktualisierten Satz ($\mathbf{p}_{n+1}$) von photometrischen Parametern zu erhalten;
Wiederholen, mit dem aktualisierten Satz ($\mathbf{p}_{n+1}$) von photometrischen Parametern, der geometrischen Ausrichtung und der photometrischen Ausrichtung, wobei die zweite Bilderfassungsvorrichtung dahin gehend gesteuert wird, während der nachfolgenden Iteration den aktualisierten Satz ($\mathbf{p}_{n+1}$) von photometrischen Parametern zu verwenden, so dass ein neues zweites Bild, das der nachfolgenden Iteration entspricht, mit dem aktualisierten Satz ($\mathbf{p}_{n+1}$) von photometrischen Parametern erfasst wird.

2. Verfahren gemäß Anspruch 1,
bei dem die geometrische Ausrichtung ein Auswerten eines Teildifferenzials der kontinuierlichen Energiefunktion bezüglich der Geometrische-Ausrichtung-Funktion (u(**x**)) aufweist; und
wobei die photometrische Ausrichtung ein Auswerten eines Teildifferenzials der kontinuierlichen Energiefunktion bezüglich des Satzes (**p**) von auf Photometrie bezogenen Parametern aufweist.

3. Verfahren gemäß Anspruch 1 oder 2, bei dem die geometrische Ausrichtung eine grundlegende duale proximale Optimierung aufweist.

4. Verfahren gemäß einem der Ansprüche 1 bis 3, bei dem die geometrische Ausrichtung ein Durchführen zumindest eines Minimierungsschrittes einer Minimierungsaufgabe bezüglich der Geometrische-Ausrichtung-Funktion (u(**x**)) und eines Variationsproblems, das durch

$$\min_{u} \left\{ \int_{\Omega} |\nabla u(\boldsymbol{x})| + \lambda \, \mathrm{AD}(u, \boldsymbol{x}, I, J) dx \right\}$$

gegeben ist, aufweist,
wobei

$\Omega$ die Bilddomäne ist,
$\nabla u(\mathbf{x})$ die Gesamtvariation von u ist,
$\lambda$ ein Gewichtungsskalar ist und
AD(u, **x**, I, J) absolute Differenzen sind, die als

$$\mathrm{AD}(u, \boldsymbol{x}, I, J) = \sum_{i=c_1}^{c_m} \left| I^i(\boldsymbol{x}) - J^i(x + u(\boldsymbol{x}), y) \right|$$

definiert sind,
wobei sich $c_1$ bis $c_m$ auf einen m-dimensionalen Farbraum beziehen.

5. Verfahren gemäß einem der Ansprüche 1 bis 4, bei dem die geometrische Ausrichtung auf einer Konvexifizierung einer Minimierungsaufgabe bezüglich der Geometrische-Ausrichtung-Funktion (u(**x**)) und eines Variationsproblems, das durch

$$\min_{u} \left\{ \int_{\Omega} |\nabla u(\boldsymbol{x})| + \lambda \, \mathrm{AD}(u, \boldsymbol{x}, I, J) dx \right\}$$

gegeben ist, beruht,
wobei

$\Omega$ die Bilddomäne ist,
$\nabla u(\mathbf{x})$ die Gesamtvariation von u ist,
$\lambda$ ein Gewichtungsskalar ist und
AD(u, **x**, I, J) absolute Differenzen sind, die als

$$\mathrm{AD}(u,x,I,J) = \sum_{i=c_1}^{c_m} \left| I^i(x) - J^i(x+u(x),y) \right|$$

definiert sind,
wobei sich $c_1$ bis $c_m$ auf einen m-dimensionalen Farbraum beziehen.

6. Verfahren gemäß Anspruch 5, bei dem die Konvexifizierung über eine funktionelle Anhebung durchgeführt wird.

7. Verfahren gemäß einem der Ansprüche 1 bis 6, bei dem die Mehransichtsbilder einem Rahmen einer Sequenz von Mehransichtsbildern entsprechen, wobei zumindest eine(r) der Geometrische-Ausrichtung-Funktion ($u(\mathbf{x})$) und des aktualisierten Satzes ($\mathbf{p}_{n+1}$), der für einen ersten Rahmen bestimmt ist, als Ausgangspunkt für zumindest eine der geometrischen Ausrichtung und/oder der photometrischen Ausrichtung eines nachfolgenden zweiten Rahmens verwendet werden.

8. Computerprogramm zum Implementieren des Verfahrens gemäß einem der Ansprüche 1 bis 7, wenn es auf einem Computer oder Signalprozessor ausgeführt wird.

9. Mehransichtsbildausrichtungsapparatur, die folgende Merkmale aufweist:

einen Eingang zum Empfangen eines Mehransichtsbildes (I, J) von zumindest einer ersten Bilderfassungsvorrichtung und einer zweiten Bilderfassungsvorrichtung;
eine Geometrische-Ausrichtung-Einheit zum geometrischen Ausrichten eines ersten Bildes (I) und eines zweiten Bildes (J) des Mehransichtsbildes (I, J), um eine aktuelle Geometrische-Ausrichtung-Funktion ($u_n(\mathbf{x})$) zu erhalten;
eine Photometrische-Ausrichtung-Einheit zum photometrischen Ausrichten des ersten Bildes (J) und einer geometrisch ausgerichteten Version (J') des zweiten Bildes (J), um Aktualisierungsinformationen ($\Delta(\partial E/\partial \mathbf{p})$) für einen aktuellen Satz ($\mathbf{p}_n$) von photometrischen Parametern zu erhalten, wobei die geometrisch ausgerichtete Version (J') des transformierten Bildes auf der Basis der aktuellen Geometrische-Ausrichtung-Funktion ($u_n(\mathbf{x})$) bestimmt wird, wobei die geometrische Ausrichtung und die photometrische Ausrichtung Teil eines Gesamtausrichtungsprozesses sind, der bezüglich einer Prozedur einer abwechselnden Energieminimierung formuliert wird, und wobei eine Geometrische-Ausrichtung-Energie und eine Photometrische-Ausrichtung-Energie in ein gemeinsames kontinuierliches Energiefunktional integriert werden;
eine Aktualisierungseinheit zum Aktualisieren des aktuellen Satzes ($\mathbf{p}_n$) von photometrischen Parametern auf der Basis der Aktualisierungsinformationen ($\Delta((\partial E/\partial \mathbf{p})$), um einen aktualisierten Satz ($\mathbf{p}_{n+1}$) von photometrischen Parametern zu erhalten; und
eine Iterationseinheit zum bedingten Steuern der Geometrische-Ausrichtung-Einheit und der Photometrische-Ausrichtung-Einheit, um eine nachfolgende Iteration mit dem aktualisierten Satz ($\mathbf{p}_{n+1}$) von photometrischen Parametern durchzuführen; und
eine Steuerung zum Steuern der zweiten Bilderfassungsvorrichtung unter Verwendung des aktuellen Satzes ($\mathbf{p}_n$) von photometrischen Parametern während einer aktuellen Iteration zum Steuern der zweiten Bilderfassungsvorrichtung unter Verwendung des aktualisierten Satzes ($\mathbf{p}_{n+1}$) von photometrischen Parametern während der nachfolgenden Iteration, so dass ein neues zweites Bild, das der nachfolgenden Iteration entspricht, mit dem aktualisierten Satz ($\mathbf{p}_{n+1}$) von photometrischen Parametern erfasst wird.

10. Mehransichtsbildausrichtungsapparatur gemäß Anspruch 9,
bei der die Geometrische-Ausrichtung-Einheit ferner zum Auswerten eines Teildifferenzials der kontinuierlichen Energiefunktion bezüglich der Geometrische-Ausrichtung-Funktion ($u(\mathbf{x})$) konfiguriert ist; und
bei der die Photometrische-Ausrichtung-Einheit ferner zum Auswerten eines Teildifferenzials der kontinuierlichen Energiefunktion bezüglich des Satzes ($\mathbf{p}$) von auf Photometrie bezogenen Parametern konfiguriert ist.

11. Mehransichtsbildausrichtungsapparatur gemäß einem der Ansprüche 9 oder 10, bei der die geometrische Ausrichtung eine grundlegende duale proximale Optimierung aufweist.

12. Mehransichtsbildausrichtungsapparatur gemäß einem der Ansprüche 9 bis 11, bei der die Geometrische-Ausrichtung-Einheit ferner zum Durchführen zumindest eines Minimierungsschrittes einer Minimierungsaufgabe bezüglich der Geometrische-Ausrichtung-Funktion ($u(\mathbf{x})$) und eines Variationsproblems, das durch

$$\min_{u} \left\{ \int_{\Omega} |\nabla u(\boldsymbol{x})| + \lambda \, \mathrm{AD}(u,\boldsymbol{x},I,J) dx \right\}$$

gegeben ist, aufweist,
wobei

$\Omega$ die Bilddomäne ist,
$\nabla u(\mathbf{x})$ die Gesamtvariation von u ist,
$\lambda$ ein Gewichtungsskalar ist und
AD(u, $\mathbf{x}$, I, J) absolute Differenzen sind, die als

$$\mathrm{AD}(u,\boldsymbol{x},I,J) = \sum_{i=c_1}^{c_m} \left| I^i(\boldsymbol{x}) - J^i(x + u(\boldsymbol{x}),y) \right|$$

definiert sind,
wobei sich $c_1$ bis $c_m$ auf einen m-dimensionalen Farbraum beziehen.

**13.** Mehransichtsbildausrichtungsapparatur gemäß einem der Ansprüche 9 bis 12, bei der die geometrische Ausrichtung auf einer Konvexifizierung einer Minimierungsaufgabe bezüglich der Geometrische-Ausrichtung-Funktion (u($\mathbf{x}$)) und eines Variationsproblems, das durch

$$\min_{u} \left\{ \int_{\Omega} |\nabla u(\boldsymbol{x})| + \lambda \, \mathrm{AD}(u,\boldsymbol{x},I,J) dx \right\}$$

gegeben ist, beruht,
wobei

$\Omega$ die Bilddomäne ist,
$\nabla u(\mathbf{x})$ die Gesamtvariation von u ist,
$\lambda$ ein Gewichtungsskalar ist und
AD(u, $\mathbf{x}$, I, J) absolute Differenzen sind, die als

$$\mathrm{AD}(u,\boldsymbol{x},I,J) = \sum_{i=c_1}^{c_m} \left| I^i(\boldsymbol{x}) - J^i(x + u(\boldsymbol{x}),y) \right|$$

definiert sind,
wobei sich $c_1$ bis $c_m$ auf einen m-dimensionalen Farbraum beziehen.

**14.** Mehransichtsbildausrichtungsapparatur gemäß einem der Ansprüche 9 bis 13, bei der die Mehransichtsbilder einem Rahmen einer Sequenz von Mehransichtsbildern entsprechen, wobei zumindest eine(r) der Geometrische-Ausrichtung-Funktion (u($\mathbf{x}$)) und des aktualisierten Satzes ($\mathbf{p}_{n+1}$), der für einen ersten Rahmen bestimmt ist, als Ausgangspunkt für zumindest eine der geometrischen Ausrichtung und/oder der photometrischen Ausrichtung eines nachfolgenden zweiten Rahmens verwendet werden.

**Revendications**

1. Procédé d'alignement d'une image multi-vue (I, J) fournie par au moins un premier dispositif d'acquisition d'image et un deuxième dispositif d'acquisition d'image, le procédé comprenant le fait de:

   commander le deuxième dispositif d'acquisition d'image à l'aide d'un ensemble actuel ($\boldsymbol{p}_n$) de paramètres photométriques pendant une itération actuelle pour fournir une deuxième image;
   effectuer (202; 502) un alignement géométrique entre une première image (I) et la deuxième image (J) de l'image multi-vue (I, J) pour obtenir une fonction d'alignement géométrique actuelle ($u_n(\boldsymbol{x})$);
   effectuer (204; 504) un alignement photométrique entre la première image (I) et une version alignée géométriquement de la deuxième image (J) pour obtenir une information de mise à jour ($\Delta(\partial E/\partial\boldsymbol{p})$) pour l'ensemble actuel ($\boldsymbol{p}_n$) de paramètres photométriques, où la version alignée géométriquement est déterminée sur base de la fonction d'alignement géométrique actuelle ($u_n(\boldsymbol{x})$), où l'alignement géométrique et l'alignement photométrique font partie d'un processus d'alignement global qui est formulé en termes d'une procédure de minimisation d'énergie alternée, et où une énergie d'alignement géométrique et une énergie d'alignement photométrique sont incorporées dans une fonctionnelle de l'énergie continue conjointe;
   mettre à jour (206; 506) l'ensemble actuel ($\boldsymbol{p}_n$) de paramètres photométriques sur base des informations de mise à jour ($\Delta(\partial E/\partial\boldsymbol{p})$) pour obtenir un ensemble mis à jour ($\boldsymbol{p}_{n+1}$) de paramètres photométriques;
   répéter, avec l'ensemble mis à jour ($\boldsymbol{p}_{n+1}$) de paramètres photométriques, l'alignement géométrique et l'alignement photométrique, où le deuxième dispositif d'acquisition d'image est commandé pour utiliser l'ensemble mis à jour ($\boldsymbol{p}_{n+1}$) de paramètres photométriques pendant l'itération successive, de sorte qu'une nouvelle deuxième image correspondant à l'itération successive soit acquise avec l'ensemble mis à jour ($\boldsymbol{p}_{n+1}$) de paramètres photométriques.

2. Procédé selon la revendication 1,
   dans lequel l'alignement géométrique comprend le fait d'évaluer une différence partielle de la fonction d'énergie continue par rapport à la fonction d'alignement géométrique ($u(\boldsymbol{x})$); et
   dans lequel l'alignement photométrique comprend le fait d'évaluer un différentiel partiel de la fonction d'énergie continue par rapport à l'ensemble ($\boldsymbol{p}$) de paramètres relatifs à la photométrie.

3. Procédé selon la revendication 1 ou 2, dans lequel l'alignement géométrique comprend une optimisation proximale double primale.

4. Procédé selon l'une quelconque des revendications 1 à 3, dans lequel l'alignement géométrique comprend le fait d'effectuer au moins une étape de minimisation d'une tâche de minimisation par rapport à la fonction d'alignement géométrique ($u(x)$) et un problème variationnel donné par

$$\min_{u}\left\{\int_{\Omega}|\nabla u(\boldsymbol{x})|+\lambda \mathrm{AD}(u,\boldsymbol{x},I,J)dx\right\},$$

où

   $\Omega$ est le domaine de l'image,
   $\nabla u(\mathbf{x})$ est la variation totale de u,
   $\lambda$ est un scalaire de pondération, et
   AD(u, $\mathbf{x}$, I, J) sont des différences absolues définies comme

$$\mathrm{AD}(u,x,I,J)=\sum_{i=c_1}^{c_m}\left|I^i(x)-J^i(x+u(\boldsymbol{x}),y)\right|,$$

avec $c_1$ à $c_m$ relatifs à un espace colorimétrique m-dimensionnel.

**5.** Procédé selon l'une quelconque des revendications 1 à 4, dans lequel l'alignement géométrique est basé sur une convexification d'une tâche de minimisation par rapport à la fonction d'alignement géométrique ($u(x)$) et un problème variationnel donné par

$$\min_{u} \left\{ \int_{\Omega} |\nabla u(\boldsymbol{x})| + \lambda \, \mathrm{AD}(u,\boldsymbol{x},I,J) d\boldsymbol{x} \right\},$$

où

$\Omega$ est le domaine de l'image,
$\nabla u(\mathbf{x})$ est la variation totale de u,
$\lambda$ est un scalaire de pondération, et
AD(u, $\mathbf{x}$, I, J) sont des différences absolues définies comme

$$\mathrm{AD}(u,\boldsymbol{x},I,J) = \sum_{i=c_1}^{c_m} \left| I^i(\boldsymbol{x}) - J^i(\boldsymbol{x} + u(\boldsymbol{x}),y) \right|,$$

avec $c_1$ à $c_m$ relatifs à un espace colorimétrique m-dimensionnel.

**6.** Procédé selon la revendication 5, dans lequel la convexification est effectuée par levage fonctionnel.

**7.** Procédé selon l'une quelconque des revendications 1 à 6, dans lequel les images multi-vue correspondent à une trame d'une séquence d'images multi-vue, dans lequel au moins l'un parmi la fonction d'alignement géométrique ($u(x)$) et l'ensemble mis à jour ($\boldsymbol{p}_{n+1}$) déterminés pour une première trame est utilisé comme point, de départ pour au moins l'un parmi l'alignement géométrique et l'alignement photométrique d'une deuxième trame successive.

**8.** Programme d'ordinateur pour mettre en œuvre le procédé selon l'une quelconque des revendications 1 à 7 lorsqu'il est exécuté sur un ordinateur ou un processeur de signal.

**9.** Appareil d'alignement d'une image multi-vue, comprenant:

une entrée destinée à recevoir une image multi-vue (I, J) d'au moins un premier dispositif d'acquisition d'image et un deuxième dispositif d'acquisition d'image;
une unité d'alignement géométrique destinée à aligner de manière géométrique une première image (I) et une deuxième image (J) de l'image multi-vue (I, J) pour obtenir une fonction d'alignement géométrique actuelle ($u_n(x)$);
une unité d'alignement photométrique destinée à aligner de manière photométrique la première image (I) et une version alignée géométriquement (J') de la deuxième image (J) pour obtenir une information de mise à jour ($\Delta(\partial E/\partial \boldsymbol{p})$) pour un ensemble actuel ($\boldsymbol{p}_n$) de paramètres photométriques, où la version alignée géométriquement (J') de l'image transformée est déterminée sur base de la fonction d'alignement géométrique actuelle ($u_n(\boldsymbol{x})$), où l'alignement géométrique et l'alignement photométrique font partie d'un processus d'alignement global qui est formulé en termes d'une procédure de minimisation d'énergie alternée, et où une énergie d'alignement géométrique et une énergie d'alignement photométrique sont incorporées dans une fonctionnelle de l'énergie continue conjointe;
une unité de mise à jour destinée à mettre à jour l'ensemble actuel ($\boldsymbol{p}_n$) de paramètres photométriques sur base des informations de mise à jour ($\Delta(\partial E/\partial \boldsymbol{p})$) pour obtenir un ensemble mis à jour ($\boldsymbol{p}_{n+1}$) de paramètres photométriques; et
une unité d'itération destinée à commander de manière conditionnelle l'unité d'alignement géométrique et l'unité d'alignement photométrique pour effectuer une itération successive avec l'ensemble mis à jour ($\boldsymbol{p}_{n+1}$) de paramètres photométriques; et

un moyen de commande destiné à commander le deuxième dispositif d'acquisition d'image à l'aide de l'ensemble actuel ($\boldsymbol{p}_n$) de paramètres photométriques pendant une itération actuelle pour commander le deuxième dispositif d'acquisition d'images à l'aide de l'ensemble mis à jour ($\boldsymbol{p}_{n+1}$) de paramètres photométriques pendant l'itération successive, de sorte qu'une nouvelle deuxième image correspondant à l'itération successive soit acquise avec l'ensemble mis à jour ($\boldsymbol{p}_{n+1}$) de paramètres photométriques.

10. Appareil d'alignement d'une image multi-vue selon la revendication 9,
dans lequel l'unité d'alignement géométrique est par ailleurs configurée pour évaluer un différentiel partiel de la fonction d'énergie continue par rapport à la fonction d'alignement géométrique ($u_n(x)$); et
dans lequel l'unité d'alignement photométrique est par ailleurs configurée pour évaluer un différentiel partiel de la fonction d'énergie continue par rapport à l'ensemble ($\mathbf{p}$) de paramètres relatifs à la photométrie.

11. Appareil d'alignement d'une image multi-vue selon l'une quelconque des revendications 9 ou 10, dans lequel l'alignement géométrique comprend une optimisation proximale double primale.

12. Appareil d'alignement d'une image multi-vue selon l'une quelconque des revendications 9 à 11, dans lequel l'unité d'alignement géométrique est par ailleurs configurée pour effectuer au moins une étape de minimisation d'une tâche de minimisation par rapport à la fonction d'alignement géométrique ($u(x)$) et un problème variationnel donné par

$$\min_{u} \left\{ \int_{\Omega} |\nabla u(\boldsymbol{x})| + \lambda \, \mathrm{AD}(u, \boldsymbol{x}, I, J) d\boldsymbol{x} \right\},$$

où

$\Omega$ est le domaine de l'image,
$\nabla u(\mathbf{x})$ est la variation totale de u,
$\lambda$ est un scalaire de pondération, et
AD(u, $\mathbf{x}$, I, J) sont des différences absolues définies comme

$$\mathrm{AD}(u, \boldsymbol{x}, I, J) = \sum_{i=c_1}^{c_m} \left| I^i(x) - J^i(x + u(\boldsymbol{x}), y) \right|,$$

avec $c_1$ à $c_m$ relatifs à un espace colorimétrique m-dimensionnel.

13. Appareil d'alignement d'une image multi-vue selon l'une quelconque des revendications 9 à 12, dans lequel l'alignement géométrique est basé sur une convexification d'une tâche de minimisation par rapport à la fonction d'alignement géométrique ($u(\boldsymbol{x})$) et un problème variationnel donné par

$$\min_{u} \left\{ \int_{\Omega} |\nabla u(\boldsymbol{x})| + \lambda \, \mathrm{AD}(u, \boldsymbol{x}, I, J) d\boldsymbol{x} \right\},$$

où

$\Omega$ est le domaine de l'image,
$\nabla u(\mathbf{x})$ est la variation totale de u,
$\lambda$ est un scalaire de pondération, et

AD(u, **x**, I, J) sont des différences absolues définies comme

$$\mathrm{AD}(u, \boldsymbol{x}, I, J) = \sum_{i=c_1}^{c_m} \left| I^i(\boldsymbol{x}) - J^i(x + u(\boldsymbol{x}), y) \right|$$

,

avec $c_1$ à $c_m$ relatifs à un espace colorimétrique m-dimensionnel.

**14.** Appareil d'alignement d'une image multi-vue selon l'une quelconque des revendications 9 à 13, dans lequel les images multi-vue correspondent à une trame d'une séquence d'images multi-vue, dans lequel au moins l'une parmi la fonction d'alignement géométrique ($u(x)$) et l'ensemble mis à jour ($\boldsymbol{p}_{n+1}$) déterminés pour une première trame est utilisé comme point de départ pour au moins l'un parmi l'alignement géométrique et l'alignement photométrique d'une deuxième trame successive.

FIGURE 1

Performing a geometric registration between a first image (I) and a second image (J) of the multiview image (I, J) to obtain a current geometric registration function $(u_n(x))$ — 202

Performing a photometric registration between the first image (I) and a geometetrically registered version (J') of the second image (J) to obtain an update information $(\Delta(\partial E/\partial p))$ for a current set $(p_n)$ of photometry-related parameters, wherein the geometrically registered version (J') is determined on the basis of the current geometric registration function $(u_n(x))$ — 204

Updating the current set $(p_n)$ of photometry-related parameters on the basis of the update information $(\Delta(\partial E/\partial p))$ to obtain an updated set $(p_{n+1})$ of photometry-related parameters — 206

208 — Subsequent iteration? — no → end — 112

yes

$p_n := p_{n+1}$ — 210

# FIGURE 2

Transforming pixel values of at least one image (J)
of the multiview images (I, J) on the basis of a current
set ($p_n$) of photometry-related parameters to obtain
at least one transformed image — 301

Determining a current geometric registration ($u_n(x)$) of
the at least one transformed image and a first image (I) — 302

Determining a geometrically registered version (J') of the
transformed image on the basis of the current geometric
registration ($u_n(x)$) — 303

Determining a new parameter set ($p_{n+1}$) for the pixel
transformation on the basis of the geometrically registered
version (J') of the transformed image and the first image (I) — 306

Determining whether a subsequent iteration is to be
performed, wherein the new parameter set ($p_{n+1}$)
replaces the current parameter set ($p_n$) and the geometri-
cally registered version (J') replaces the at least one
image (J) for the subsequent iteration — 308

FIGURE 3

FIGURE 4

FIGURE 5

FIGURE 6

**REFERENCES CITED IN THE DESCRIPTION**

**Non-patent literature cited in the description**

- **W. WAIZENEGGER ; I. FELDMANN ; P. EISERT.** Depth Driven Photometric and Geometric Image Registration for Real-Time Stereo Systems. *Proc. International Workshop on Vision, Modeling, and Visualization,* October 2011, 25-32
- A Constrained Optimization Perspective on Joint Spatial Resolution and Dynamic Range Enhancement. 2010 44th ASILOMAR Conference on Signals, Systems and Computers. IEEE, 07 November 2010, 870-874
- Dense and Deformable Motion Segmentation for Wide Baseline Images. Image Analysis. Springer Berlin Heidelberg, 15 June 2009, 379-389
- **W. WAIZENEGGER ; I. FELDMANN ; P. EISERT.** Depth-Driven Photometric and Geometric Image Registration for Real-Time Stereo Systems. *Vision, Modeling, and Visualization,* 2011, iphome.hhi.de/eisert/papers/vmv2011d.pdf
- **BARTOLI A.** Groupwise geometric and photometric direct image registration. Pattern Analysis and Machine Intelligence. *IEEE Transactions on,* 2008, vol. 30 (12), 2098-2108
- **CHAKRABARTI A. ; SCHARSTEIN D. ; ZICKLER T.** An empirical camera model for internet color vision. *In British Machine Vision Conference (BMVC 2009),* 2009
- Comprehensive colour image normalization. **FINLAYSON G. D. ; SCHIELE B. ; CROWLEY J. L.** In Proceedings of the 5th European Conference on Computer Vision. Springer-Verlag, 1998, vol. I, 475-490
- **GROSSBERG M. D. ; NAYAR S. K.** Determining the camera response from images: What is knowable?. *IEEE Transactions on Pattern Analysis and Machine Intelligence,* 2003, vol. 25 (11), 1455-1467
- **HEO Y. S. ; LEE K. M. ; LEE S. U.** Illumination and camera invariant stereo matching. *In Computer Vision and Pattern Recognition, 2008. CVPR 2008. IEEE Conference on,* 2008, 1-8
- **HIRSCHMULLER H. ; SCHARSTEIN D.** Evaluation of cost functions for stereo matching. *CVPR07,* 2007, 1-8
- **HIRSCHMÜLLER H. ; SCHARSTEIN D.** Evaluation of stereo matching costs on images with radiometric differences. *IEEE Transactions on Pattern Analysis and Machine Intelligence,* 2009, vol. 31 (9), 1582-1599

- **ILIE A. ; WELCH G.** Ensuring color consistency across multiple cameras. *In Computer Vision, 2005. ICCV 2005. Tenth IEEE International Conference on,* 2005, vol. 2, 1268-1275
- **KIM S. J. ; FRAHM J. ; POLLEFEYS M.** Radiometric calibration with illumination change for outdoor scene analysis. *In Computer Vision and Pattern Recognition, 2008. CVPR 2008. IEEE Conference on,* 2008, 1-8
- **KIM S. J. ; POLLEFEYS M.** Robust radiometric calibration and vignetting correction. Pattern Analysis and Machine Intelligence. *IEEE Transactions on,* 2008, vol. 30 (4), 562-576
- Automatic acquisition of Time-Slice image sequences. **KETTERN M. ; SCHNEIDER D. C. ; PRESTELE B. ; ZILLY F. ; EISERT P.** In Visual Media Production, Conference for (Los Alamitos, CA, USA, 2010). IEEE Computer Society, vol. 0, 40-48
- **POCK T. ; SCHOENEMANN T. ; GRABER G. ; BISCHOF H. ; CREMERS D.** A convex formulation of continuous Multi-Label problems. *In European Conference on Computer Vision (ECCV),* October 2008
- Color image processing pipeline. **RAMANATH R. ; SNYDER W. ; YOO Y. ; DREW M.** Signal Processing Magazine. IEEE, 2005, vol. 22, 34-43
- **SCHREER O. ; FELDMANN I. ; ATZPADIN N. ; EISERT P. ; KAUFF P. ; BELT H.** 3DPresence -A system concept for Multi-User and Multi-Party immersive 3D videoconferencing. *In Visual Media Production (CVMP 2008), 5th European Conference on,* 2008, 1-8
- **WAIZENEGGER W. ; ATZPADIN N. ; SCHREER O. ; FELDMANN I.** Patch-Sweeping with robust prior for high precision depth estimation in real-time systems. *In Proc. International Conference on Image Processing (ICIP 2011),* 2011
- **WAIZENEGGER W. ; FELDMANN I. ; SCHREER O.** Real-time patch sweeping for high-quality depth estimation in 3D videoconferencing applications. *In Proc. of Real-Time Image and Video Processing,* 2011
- **WANG L. ; YANG R. ; DAVIS J. E.** BRDF invariant stereo using light transport constancy. *IEEE Transactions on Pattern Analysis and Machine Intelligence,* 2007, vol. 29 (9), 1616-1626

- **ZILLY F. ; MUELLER M. ; EISERT P. ; KAUFF P.**
Joint estimation of epi-polar geometry and rectification parameters using point correspondences for stereoscopic TV sequences. *In 3DPVT10,* 2010